(19) Europäisches Patentamt
European Patent Office
Office européen des brevets

(11) **EP 3 071 603 B1**

(12) **EUROPÄISCHE PATENTSCHRIFT**

(45) Veröffentlichungstag und Bekanntmachung des Hinweises auf die Patenterteilung:
**06.02.2019   Patentblatt 2019/06**

(21) Anmeldenummer: **14793579.5**

(22) Anmeldetag: **06.11.2014**

(51) Int Cl.:
***C08C 1/14*** *(2006.01)*          ***C08F 6/22*** *(2006.01)*
***C08J 5/12*** *(2006.01)*

(86) Internationale Anmeldenummer:
**PCT/EP2014/073889**

(87) Internationale Veröffentlichungsnummer:
**WO 2015/074883 (28.05.2015 Gazette 2015/21)**

(54) **KONTINUIERLICHES ODER SEMI-KONTINUIERLICHES GEFRIERKOAGULATIONSVERFAHREN FÜR WÄSSRIGE POLYMERDISPERSIONEN**

CONTINUOUS OR SEMI-CONTINUOUS FREEZE COAGULATION METHOD FOR AQUEOUS POLYMER DISPERSIONS

PROCÉDÉ DE COAGULATION PAR GEL SEMI-CONTINU POUR DES DISPERSIONS POLYMÈRES AQUEUSES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.11.2013   EP 13193654**

(43) Veröffentlichungstag der Anmeldung:
**28.09.2016   Patentblatt 2016/39**

(73) Patentinhaber: **Evonik Röhm GmbH**
**64293 Darmstadt (DE)**

(72) Erfinder:
• **STÖRKLE, Dominic**
  **201107 Shanghai (CN)**
• **WEBER, Andreas**
  **60596 Frankfurt (DE)**
• **VORHOLZ, Johannes**
  **63755 Alzenau (DE)**
• **JUNGKAMP, Melanie**
  **West Lafayette, Indiana 47906 (US)**
• **DENGER, Marcus**
  **64395 Brensbach (DE)**
• **HOFFMANN, Norbert**
  **64347 Griesheim (DE)**
• **RÜPPEL, Mona**
  **64739 Hoechst (DE)**
• **MÜLLER, Reiner**
  **64584 Biebesheim (DE)**
• **ALBRECHT, Klaus**
  **55129 Mainz (DE)**

(56) Entgegenhaltungen:
**US-A- 2 187 146     US-A- 4 591 632
US-A- 4 857 631     US-A1- 2006 281 946**

• **"NITRILE RUBBER (NBR) PROPERTIES, GRADES, AND APPLICATIONS ED - ELVERS B; HAWKINS S; RUSSEY W; SCHULZ G", 1. Januar 1993 (1993-01-01), ULLMANN'S ENCYCLOPEDIA OF INDUSTRIAL CHEMISTRY REFRACTORY CERAMICS TO SILICON CARBIDE, VCH VERLAGSGESELLSCHAFT MBH, WEINHEIM, GERMANY, PAGE(S) 255 - 261, XP008058991, ISBN: 978-0-89573-173-9 Seite 255, Zeile 2 - rechte Spalte, Zeile 15**

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft ein kontinuierliches oder semi-kontinuierliches Gefrierkoagulationsverfahren für wässrige Polymerdispersionen.

Unter einem "kontinuierlichen" Gefrierkoagulationsverfahren wird im Sinne der Erfindung ein Verfahren verstanden, das einen kontinuierlichen Massefluss bezüglich des Gefrierschrittes besitzt, d.h. einen kontinuierlichen Zu- und Ablauf.

Unter einem "semi-kontinuierlichen" Gefrierkoagulationsverfahren wird im Sinne der Erfindung ein Verfahren verstanden, bei dem die Schritte Befüllen, Gefrieren und Ablassen nacheinander erfolgen. Dabei liegt vorzugsweise ein kontinuierlicher Massefluss bezüglich des Gefrierschrittes vor, d.h. ein kontinuierlicher Zu- und Ablauf gemittelt über eine Zeit von 5 Stunden, vorzugsweise gemittelt über eine Zeit von 3 Stunden, bevorzugt gemittelt über eine Zeit von 1 Stunde.

Hintergrund der Erfindung:

Viele Polymere und insbesondere Schlagzähmodifizierungsmittel für Polymere werden durch Homo- oder Copolymerisation geeigneter Monomere in einem flüssigen Medium durch Suspensions-, Emulsions- oder Fällungspolymerisation hergestellt. Das Polymer fällt dabei in Form einer meist wäßrigen Feststoffdispersion (Latex) an, aus dem das Polymer abgetrennt werden muss, sofern der Latex nicht als solcher verwendet wird.

Die Abtrennung des Polymeren aus der Dispersion geschieht üblicherweise durch Koagulation, gefolgt von einer Fest-Flüssig-Trennung. Hierzu sind eine Reihe verschiedener Verfahren bekannt, beschrieben in Houben-Weyl, Methoden der organische Chemie. Die Abtrennungsverfahren können in drei Hauptgruppen eingeteilt werden:

 a) Abtrennung der wässrigen Phase in gasförmiger Form
 b) Abtrennung der wässrigen Phase in flüssiger Form unter Zugabe von Hilfsmitteln
 c) Abtrennung der wässrigen Phase in flüssiger Form ohne die Zugabe von Hilfsmitteln

Bei a) und b) besteht generell das Problem, dass es zu einer Beeinträchtigung der Kunststoffqualität kommen kann, da Hilfsmittel für die Polymerisation (z.B. Emulgatoren) und/oder die Hilfsmittel für die Abtrennung teilweise im Polymer verbleiben und so im späteren Kunststoffbauteil unerwünschte Nebenreaktionen, wie z. B. Gelbfärbung oder Trübung verursachen können.

DE 19718597 C1 beschreibt ein zweistufiges Verfahren zur Entwässerung von Kunststoffdispersionen, umfassend a) die Koagulation des zweiphasigen flüssigen Gemischs in einem ersten Extruder und b) die Entwässerung des Koagulats in einem zweiten Extruder.

US 4 591 632 beschreibt den Prozess der Gefrierkoagulation an kalten Oberflächen. US 4,591,632 lehrt jedoch nicht, den Fest-Flüssig-Trennungsschritt so durchzuführen, dass der Trennfaktor mindestens 0,55 beträgt und zwischen dem Gefrierschritt und dem Fest-Flüssig-Trennungsschritt Wasser oder Wasserdampf der gefrorenen Dispersion zugeführt wird.

Die Anordnung für ein kontinuierliches Gefrierkoagulationsverfahren der Druckschrift US 4,857,631 entspricht im Wesentlichen der entsprechenden Anordnung in US 4,591,632, wobei der Polymergehalt in der Polymerdispersion in US 4,857,631 bei 57-88 Gew.-% liegt. In dem Verfahren gemäß US 4,591,632 wird zudem das Förderband mit dem Gefriergut und nicht direkt das Gefriergut direkt mit dem Wasserdampf erwärmt.

US 2,187,146 lehrt ein Koagulationsverfahren für eine wässrige Dispersion von einem Halogen-2-Butadien-1,3-Polymer. Nach dem Gefrierschritt erfolgt die Zugabe von warmem Wasser und dient der Aufgabe, das gefrorene Koagulat zu schmelzen. US 2,187,146 lehrt nicht, dass der Trennfaktor bei dem Fest-Flüssig-Trennungsschritt mindestens 0,55 betragen soll, damit das resultierende Produkt eine gute optische Qualität hat.

Ähnlich wie US 2,187,146 schlägt B. Elvers et al. (Ullmann's Encyclopedia of industrial Chemistry, Vol. A23, Seiten 255 - 261) vor, das gefrorene Koagulat durch ein Besprühen mit Wasser aufzutauen. Die Bedeutung von einem ausreichend hohen Trennfaktor P im Fest-Flüssig-Trennungsschritt für die optische Qualität des resultierenden Produkts wird auch in B. Elvers et al. nicht erkannt.

Der Druckschrift US 2006/0281946 A1 ist ebenfalls keine technische Lehre zu entnehmen, dass die Zugabe von Wasser und/oder Wasserdampf zwischen dem Gefrierschritt und dem Fest-Flüssig-Trennungsschritt und ein Trennfaktor P von mindestens 0,55 bei dem Fest-Flüssig-Trennungsschritt essenziell sind, um ein Produkt mit einer ausreichend hohen optischen Qualität zu erhalten.

Freeze Coagulation of ABS Latex, Adler et al., Ind. Eng. Chem. Res. 1997, 36, 2156, beschreibt die Gefrierkoagulation von ABS-Latices durch den Kontakt mit einer kalten Oberfläche und mit flüssigem $CO_2$.

DE 32 30 128 A1, "Gefrierkoagulation von Polymerdispersionen", Bayer Lev., 1982, beschreibt den Prozess der Gefrierkoagulation in bewegter, scherend beanspruchter Produktschicht.

EP 0467288 B1 beschreibt die diskontinuierliche Gefrierkoagulation von Acrylpolymer Latices, aus denen Kunststoffbauteile mit guten optischen Eigenschaften und gutem Trübungsverhalten bei Wassereinwirkung hergestellt werden können. Dabei wurde beobachtet, dass Gefrierraten von 4 cm/Stunde oder weniger zu bevorzugen sind, da unter diesen Bedingungen die Fest-Flüssig-Trennung gut möglich ist und somit Hilfsmittel für die Polymerisation (z.B. Emulgatoren) mit abgetrennt werden können.

Aufgabe und Lösung

In Anbetracht des hierin angegebenen und diskutierten Standes der Technik war es Aufgabe der vorliegenden Erfindung, gegenüber dem im Stand der Technik bekannten diskontinuierlichen Gefrierkoagulationsverfahren, ein kontinuierliches oder semi-kontinuierliches Gefrierkoagulationsverfahren zur Verfügung zu stellen.

Weiter bestand ebenso die Aufgabe, dass das zur Verfügung zu stellende Verfahren geeignet ist, die Steuerung der Produkteigenschaften zu ermöglichen.

Ein zusätzliche Aufgabe bestand darin, ein Verfahren zur Verfügung zu stellen, durch das Verfahrensprodukte erhalten werden, die bessere optische Eigenschaften, insbesondere bessere Haze-Werte gemäß ASTM D 1003 (1997), insbesondere nach Heißwasserlagerung bei 70 °C und 80 °C, besitzen als Verfahrensprodukte, die gemäß aus den im Stand der Technik bekannten Verfahren hergestellt werden können. Insbesondere war es die Aufgabe, Halbzeuge, vorzugsweise transparente Halbzeuge, jeweils hergestellt mit Verfahrensprodukt aus dem zur Verfügung zu stellenden Verfahren, zu erhalten, die einen Haze gemäß ASTM 1003 (1997) von < 20%, vorzugsweise < 15%, nach Heißwasserlagerung bei 70° C, vorzugsweise nach Heißwasserlagerung bei 80° C, aufweisen.

Diese Aufgaben sowie weitere, die zwar nicht explizit genannt werden, sich aber aus den hierin diskutierten Zusammenhängen ableiten lassen oder sich aus diesen ergeben, werden überraschend gelöst durch ein kontinuierliches oder semi-kontinuierliches Gefrierkoagulationsverfahren für eine wässrige Polymerdispersion umfassend einen Gefrierschritt und einen Fest-Flüssigtrennungsschritt, dadurch gekennzeichnet, dass das Verfahren den weiteren Schritt

- Zugabe von Wasser und/oder Wasserdampf zwischen dem Gefrierschritt und dem Fest-Flüssigtrennungsschritt umfasst,

wobei der Fest-Flüssigtrennungsschritt durch einen Trennfaktor P gemäß der Formel

$$P = \frac{m_{H2O,mech}}{m_{H2O,tot}}$$

charakterisiert ist, wobei $m_{H2O,mech}$ für die mechanisch abgetrennte Wassermenge, das heißt, für die Menge der abgetrennten wässrigen Phase, und $m_{H2O,tot}$ für die gesamte Wassermenge als Summe des Wassers, das heißt, der wässrigen Phase aus der ursprünglich eingesetzten wässrigen Polymerdispersion und des zugesetzten Wassers und/oder Wasserdampfs, steht, und wobei $P \geq 0{,}55$, vorzugsweise $\geq 0{,}8$, bevorzugt $\geq 0{,}93$, weiter bevorzugt $\geq 0{,}95$, ist.

Dieses erfindungsgemäße Verfahren ermöglicht die Steuerung von bestimmten Produkteigenschaften durch bestimmte Prozessparameter wie z.B. Gefrierrate, Sintertemperatur und Anteil des abgetrennten Wassers/der abgetrennten wässrigen Phase.

Der Vorteil der vorliegenden Erfindung besteht darin, dass die Steuerung und damit die Optimierung der Restfeuchte, der Koagulatstabilität und der anwendungstechnischen Eigenschaften (Haze) durch die Variation der Prozessparameter Walzentemperatur $T_W$, (Walzen-) Drehzahl $n_W$, Eintauchtiefe der Walze $h_{Eintauch}$ und der Sintertemperatur T ermöglicht wird. Dies ist ein entscheidender Vorteil gegenüber allen Verfahren mit statischem (diskontinuierlichem) Einfrieren (in Behältern). Bei diesen Verfahren mit statischem (diskontinuierlichem) Einfrieren ist nur eine sehr eingeschränkte und wirtschaftlich nicht optimale Steuerbarkeit über die Außentemperatur und die Behältergeometrie möglich. Zudem werden durch das erfindungsgemäße Verfahren bessere optische Eigenschaften als im bisherigen Stand der Technik-Verfahren erreicht.

Kurzbeschreibung der Abbildungen:

Ausführungsbeispiele und Ergebnisse des erfindungsgemäßen Verfahrens sind in den nachfolgenden Abbildungen dargestellt und werden hiermit beschrieben. Es zeigen

- Abbildung 1: ein Fließbild eines erfindungsgemäßen Verfahrens,
- Abbildung 2: eine Walzeneismaschine/einen Walzenkühler,
- Abbildung 3: ein Verfahren mit Walzeneismaschine, diskontinuierlicher Behälter-Sinterung im Trockenschrank und Zentrifuge,
- Abbildung 4: ein erfindungsgemäßes Verfahren mit Walzeneismaschine, diskontinuierlicher/kontinuierlicher Sinterung im Rührkessel und Zentrifuge,
- Abbildung 5: ein erfindungsgemäßes Verfahren mit Walzeneismaschine, diskontinuierlicher/kontinuierlicher Sinterung im Rührkessel und Zentrifuge.

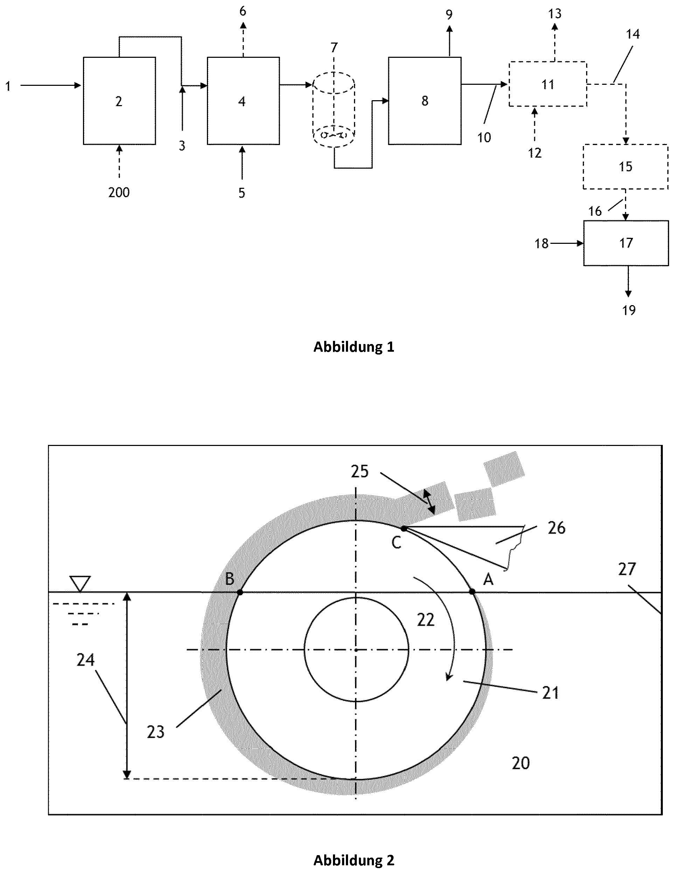

Bezugszeichenliste Abbildung 1

| 1 | Dispersion | 11 | Trocknung (optional) |
|---|---|---|---|
| 2 | Gefrieren | 12 | Heißgas |
| 3 | Wasser und/oder Wasserdampf | 13 | Abgas |
| 4 | Erhitzen / Stabilisieren | 14 | Produkt (ggf. getrocknet) |
| 5 | Wasser und/oder Wasserdampf | 15 | Kompaktierung (optional) |
| 6 | Abgas | 16 | Produkt (ggf. Kompaktat) |
| 7 | Pufferbehälter (optional) | 17 | Compoundierung (z.B. Granulation oder Extrusion) |
| 8 | Fest-Flüssig-Trennung | 18 | Additive |
| 9 | Abwasser (mit Feststoffanteil) | 19 | Endprodukt |
| 10 | Produkt (mit Restfeuchte) | 200 | Wasser |

Bezugszeichenliste Abbildung 2

| 20 | Dispersion |
|---|---|
| 21 | Walze |
| 22 | Drehrichtung |
| 23 | Eis |
| 24 | Eintauchtiefe der Walze $h_{Eintauch}$ |
| 25 | Dicke der Eisschicht $h_{Eis}$ |
| 26 | Messer (variable Position) |
| 27 | Behältnis (Wanne) |
| A | Start eingetauchter Walzenumfang |
| B | Ende eingetauchter Walzenumfang |
| C | Position des Messers |

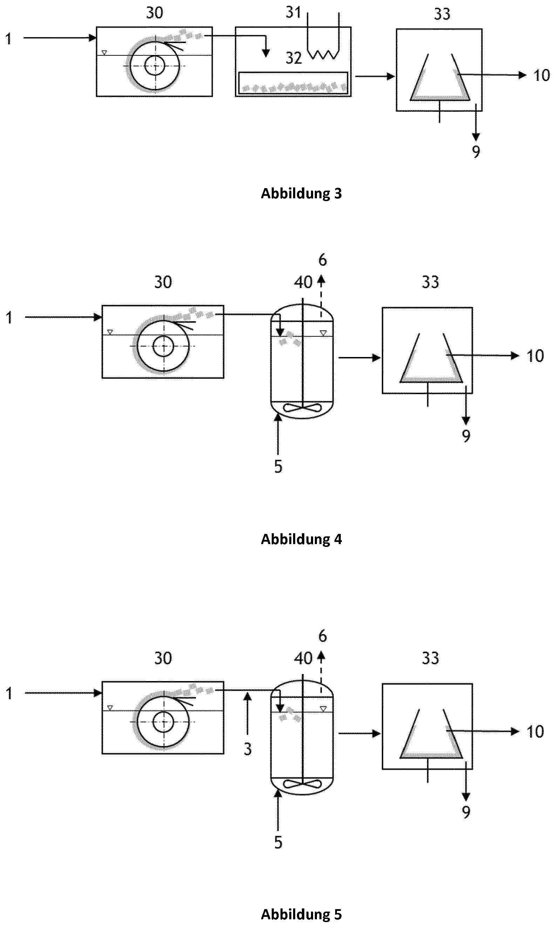

Bezugszeichenliste Abbildung 3

| 1 | Dispersion |
|---|---|
| 9 | Abwasser (mit Feststoffanteil) |
| 10 | Produkt (mit Restfeuchte) |
| 30 | Walzeneismaschine |
| 31 | Trockenschrank |
| 32 | Behälter (geschlossen) |
| 33 | Zentrifuge |

Bezugszeichenliste Abbildung 4

| 1 | Dispersion |
|---|---|
| 5 | Wasser und/oder Wasserdampf |
| 6 | Abgas |
| 9 | Abwasser (mit Feststoffanteil) |
| 10 | Produkt (mit Restfeuchte) |
| 30 | Walzeneismaschine |
| 33 | Zentrifuge |
| 40 | Rührkessel |

Bezugszeichenliste Abbildung 5

| 1 | Dispersion |
|---|---|
| 3 | Wasser und/oder Wasserdampf |
| 5 | Wasser und/oder Wasserdampf |
| 6 | Abgas |
| 9 | Abwasser (mit Feststoffanteil) |
| 10 | Produkt (mit Resfeuchte) |
| 30 | Walzeneismaschine |
| 33 | Zentrifuge |
| 40 | Rührkessel |

Detaillierte Beschreibung der Erfindung:

Die vorliegende Erfindung stellt ein kontinuierliches oder semi-kontinuierliches Gefrierkoagulationsverfahren für wässrige Polymerdispersionen zur Verfügung, das einen Gefrierschritt und einen Fest-Flüssigtrennungsschritt umfasst und weiter dadurch gekennzeichnet ist, dass dieses Verfahren den weiteren Schritt umfasst:

-   Zugabe von Wasser und/oder Wasserdampf zwischen dem Gefrierschritt und dem Fest-Flüssigtrennungsschritt,

wobei der Fest-Flüssigtrennungsschritt durch einen Trennfaktor P gemäß der Formel

$$P = \frac{m_{H2O,mech}}{m_{H2O,tot}}$$

charakterisiert ist, wobei $m_{H2O,mech}$ für die mechanisch abgetrennte Wassermenge, das heißt, für die Menge der abgetrennten wässrigen Phase, und $m_{H2O,tot}$ für die gesamte Wassermenge als Summe des Wassers, das heißt, der wässrigen Phase aus der ursprünglich eingesetzten wässrigen Polymerdispersion und des zugesetzten Wassers und/oder Wasserdampfs, steht, und wobei $P \geq 0{,}55$, vorzugsweise $\geq 0{,}8$, bevorzugt $\geq 0{,}93$, weiter bevorzugt $\geq 0{,}95$, ist.

Besonders vorteilhaft zeigte es sich dabei, dass bei der Herstellung von Prüfkörpern aus dem nach obigem Verfahren hergestelltem Verfahrensprodukt der Haze dieser Prüfkörper gemäß ASTM 1003 (1997) bei < 20%, vorzugsweise < 15%, nach Heißwasserlagerung bei 70° C, vorzugsweise bei 80° C, lag.

Dieses erfindungsgemäße Verfahren ermöglicht die Steuerung von bestimmten Produkteigenschaften durch bestimmte Prozessparameter wie z.B. Gefrierrate, Sintertemperatur und Anteil des abgetrennten Wassers /der abgetrennten wässrigen Phase.

In Abbildung 1 ist eine Ausführungsform eines erfindungsgemäßen kontinuierlichen oder semi-kontinuierlichen Gefrierkoagulationsverfahrens schematisch dargestellt.

Gefrierschritt:

Erfindungsgemäß kann der Gefrierschritt in jedem technischen Gerät, das zum kontinuierlichen oder semi-kontinuierlichen Einfrieren von Flüssigkeiten oder Dispersionen geeignet ist, erfolgen. Darüber hinaus sind Eigenbauten (z.B. Rohrbündel), in denen das Material eingefroren wird, möglich.

Beispiele für erfindungsgemäß einsetzbare, kommerziell erhältliche Geräte, die ein kontinuierliches Einfrieren ermöglichen, sind

- Scherbeneiserzeuger, insbesondere Walzeneismaschinen oder Walzenkühler, (z.B. GEA Refrigeration Technologies, Ziegra Eismaschinen GmbH, Scotsman Ice Systems, Icesta Ice Systems, Higel Kältetechnik e.K., Maja-Maschinenfabrik, Funk GmbH, Gouda, DVA)
- Erzeuger für Brucheis, Nuggeteis und StreamIce® (z.B. Scotsman Ice Systems, Ziegra Eismaschinen GmbH)
- Schneckenwärmetauscher (z.B. AMF, Celsius)
- Schabewärmetauscher (z.B. HRS, Waukesha, AxFlow, OMVE)
- Bandeiserzeuger (z.B. SAMFI)
- Extrudertechnologien (z.B. Entex).

Der kontinuierliche Gefrierschritt wird erfindungsgemäß vorzugsweise in einem Scherbeneiserzeuger oder einem Wärmetauscher durchgeführt. In einer weiter bevorzugten Ausführungsform ist das erfindungsgemäße Verfahren dadurch gekennzeichnet, dass der Gefrierschritt auf einer gekühlten, drehenden Walze, vorzugsweise auf einer Walzeneismaschine, erfolgt. Dabei ist insbesondere bevorzugt, dass die gekühlte, drehende Walze, vorzugsweise die Walzeneismaschine, in die zu gefrierende wässrige Polymerdispersion eintaucht.

Beispiele für erfindungsgemäß einsetzbare, kommerziell erhältliche Geräte, die ein semi-kontinuierliches Einfrieren ermöglichen, sind

- Tube- bzw. Rohreiserzeuger (z.B. Icesta Ice Systems, Vogt Ice, Sulzer Kristaller)
- Platteneismaschinen (z.B. HTT-Buco, Vogt Ice)
- Blockeiserzeuger (z.B. Icesta Ice Systems, Ziegra Eismaschinen GmbH).

Bei einem semi-kontinuierlichen Gefrierschritt werden vorzugsweise Tubeeiserzeuger und Blockeiserzeuger verwendet.

In Tubeeiserzeugern wird Wasser in aufrecht stehenden Rohren eingefroren. Anschließend wird die Rohrwandung wieder erwärmt, worauf die gefrorenen Eisstangen herausrutschen und anschließend durch ein Messer in kurze Stücke geschnitten werden. Diese Apparate sind üblicherweise so ausgelegt, dass in der Mitte der Eisstange ein nicht gefrorener Kern verbleibt, um die Belastung durch die Ausdehnung des Wassers beim Gefrieren zu minimieren.

Die Gefrierrate G wird erfindungsgemäß über

$$G = \frac{h_{Eis}}{t_{Einfrier}} \qquad\qquad (1)$$

bestimmt, wobei $h_{Eis}$ für die Dicke der innerhalb der Zeit $t_{Einfrier}$ gebildeten Eisschicht steht.

In einer bevorzugten Ausführungsform des erfindungsgemäßen Verfahrens erfolgt der Gefrierschritt mit einer Gefrierrate G gemäß Gleichung (1), wobei G

- im Bereich von 1 - 100 cm/h,
- vorzugsweise im Bereich von 2 - 70 cm/h,
- bevorzugt im Bereich von 4 - 65 cm/h,
- besonders bevorzugt im Bereich von 5 - 60 cm/h,
- ganz besonders bevorzugt im Bereich von 6 - 55 cm/h,
- insbesondere bevorzugt im Bereich von 7 - 35 cm/h,
- weiter insbesondere bevorzugt im Bereich von 8 - 25 cm/h und
- vor allem bevorzugt im Bereich von 9 - 15 cm/h, liegt.

Ermittlung der Gefrierrate bei der Verwendung einer Walzeneismaschine:

In Abbildung 2 ist beispielhaft für die Verwendung in einem erfindungsgemäßen Verfahren eine Walzeneismaschine dargestellt, auf der die vorgelegte Dispersion, d.h. die wässrige Polymerdispersion, kontinuierlich in einer Schicht auf einer gekühlten, sich drehenden Walze eingefroren wird.

Die Walze mit dem Radius $r_W$ und der Breite $b_W$ dreht sich mit der eingestellten Drehzahl nw in der vorgelegten Dispersion (= Dispersionsvorlage) der Temperatur $T_D$. Walzentemperatur $T_W$, Drehzahl $n_W$ und Eintauchtiefe der Walze $h_{Eintauch}$ sind hierbei variabel. Im Rahmen der vorliegenden Erfindung wird angenommen, dass die Walzentemperatur $T_W$ gleich der Temperatur des Verdampfers der Eismaschine ist.

Der Gefriervorgang beginnt nach dem Eintauchen der sich drehenden Walzenoberfläche mit der Walzentemperatur $T_W$ in die Dispersionsvorlage. Die Kontaktzeit der Walze mit der Dispersion $t_{Eintauch}$ (= Eintauchdauer) entspricht der Zeit, die zum Zurücklegen des Kreisbogens A - B (vgl. Abbildung 2) benötigt wird. Diese Zeit hängt von der Drehzahl $n_W$ und dem Eintauchgrad der Walze ab. Der Eintauchgrad ist dabei definiert als das Verhältnis der eingetauchten Oberfläche zur Gesamtoberfläche der Walze. Im bevorzugten Falle einer zylindrischen Walze entspricht er dem Verhältnis von eingetauchtem Umfang $U_{Eintauch}$ (= Strecke des Kreisbogens A-B in Abbildung 2) zum Gesamtumfang der Walze $U_W$. Die gebildete Eisschicht legt nach dem Auftauchen aus der Dispersionsvorlage noch die Strecke B - C (vgl. Abbildung 2) zurück, bevor sie von einem Messer abgeschabt und ausgetragen wird.

Von der Erfindung ebenfalls umfasst sind auch Ausführungsformen, bei denen alternativ auch mehrere Umdrehungen der Walze mit Eisbildung möglich sind, bevor die Eisschicht abgetragen wird. Diese Ausführungen können z.B. durch einen variablen Abstand zwischen Messer und Oberfläche der Walze abgebildet werden.

Die Befüllung der Dispersionsvorlage kann kontinuierlich oder semi-kontinuierlich (batchweise) erfolgen.

In einer bevorzugten Ausführungsform des erfindungsgemäßen Verfahrens wird die Dispersionsvorlage kontinuierlich so befüllt, dass der Eintauchgrad bzw. die Eintauchtiefe der Walze $h_{Eintauch}$ während des Gefriervorgangs konstant bzw. annähernd konstant bleibt.

Zur Ermittlung der Gefrierrate im Rahmen der Erfindung wird als Näherung angenommen, dass die tatsächlich gebildete Eisschicht $h_{Eis}$ (s.u.) nur auf dem eingetauchten Anteil der Walze (Kreisbogen A - B in Abbildung 2) während der Zeit des Eintauchens $t_{Eintauch}$ gebildet wird. Die heranzuziehende Dicke der Eisschicht $h_{Eis}$ umfasst jedoch auch gegebenenfalls einen Anteil, der dadurch entsteht, dass der nach dem Auftauchen die Eisschicht benetzende, wässrige Film ebenso durchfriert. Es wird somit angenommen, dass die gesamte Eisschicht $h_{Eis}$ nur auf dem eingetauchten Anteil der Walze während der Zeit des Eintauchens $t_{Eintauch}$ gebildet wird.

"Gefroren" gemäß der vorliegenden Erfindung heißt, dass die Dispersion, d.h. die wässrige Polymerdispersion, in festem Aggregatzustand vorliegt. Der Vorteil an einem hohen Anteil an gefrorener wässriger Polymerdispersion nach dem Gefrierschritt besteht darin, dass damit ein möglichst kleiner Polymer-Anteil im Abwasser erzielt werden kann.

Für ein erfindungsgemäßes Verfahren unter Verwendung einer Walzeneismaschine gemäß oder angelehnt an Abbildung 2 und obiger Beschreibung gilt demnach

$$G^* = \frac{h_{Eis}}{t_{Eintauch}} \tag{2}$$

und damit $G^* \approx G$.

Die Eintauchdauer $t_{Eintauch}$ ist wie folgt definiert:

$$t_{Eintauch} = \frac{1}{n_W} \cdot Eintauchgrad = \frac{1}{n_W} \cdot \frac{U_{Eintauch}}{U_W} \tag{3}$$

$h_{Eis}$ kann, sofern nicht experimentell bestimmbar, mit Hilfe der Massenströme $\dot{m}_{Eis} = \dot{m}_{Disp}$ und den folgenden Zusammenhängen bestimmt werden: Bei konstanter Menge der Dispersionsvorlage im Behältnis über die Zeit ist der dem Behältnis zugeführte Massenstrom Dispersion $\dot{m}_{Disp}$ gleich dem aus dem Behältnis ausgetragenen Massenstrom Dispersionseis $\dot{m}_{Eis}$, d.h. $\dot{m}_{Eis} = \dot{m}_{Disp}$. Mit bekanntem Massenstrom $\dot{m}_{Disp}$, bekannter Walzendrehzahl $n_W$ und bekannten Geometriedaten der Walze erfolgt die Berechnung von $h_{Eis}$ folgendermaßen:

Für das pro Umdrehung gebildete Eisvolumen $V_{Eis}$ gilt

$$V_{Eis} = \frac{\dot{m}_{Eis}}{\rho_{Eis} n_W} \tag{4}$$

wobei für die Dichte der gefrorenen Dispersion für die vorliegende Erfindung ein Zahlenwert von $\rho_{Eis}$ = 1015 kg/m$^3$ angenommen wurde.

Weiter gilt:

$$V_{Eis} = \pi \left(r_W + h_{Eis}\right)^2 \cdot b_W - \pi \, r_W{}^2 \cdot b_W = \pi \, b_W \left(2 \, r_W \, h_{Eis} + h_{Eis}{}^2\right) \qquad (5)$$

Hieraus ergibt sich folgender Zusammenhang zwischen der Dicke der Eisschicht $h_{Eis}$, der Walzengeometrie, der Drehzahl $n_W$ und dem Ausstoß $\dot{m}_{Eis}$:

$$h_{Eis}{}^2 + 2 \, r_W \, h_{Eis} - \frac{\dot{m}_{Eis}}{\pi \, \rho_{Eis} \, n_W \, b_W} = 0 \qquad (6)$$

Aus der Lösung dieser quadratischen Gleichung (6) folgt die Dicke der Eisschicht $h_{Eis}$ und daraus mit Hilfe der Eintauchdauer $t_{Eintauch}$ (Gleichung (3)) die Gefrierrate G* (Gleichung (2)) für ein erfindungsgemäßes Verfahren unter Verwendung einer Walzeneismaschine gemäß Abbildung 2.

Eine bevorzugte Ausführungsform des erfindungsgemäßen Verfahrens ist dadurch gekennzeichnet, dass die wässrige Polymerdispersion nach dem Gefrierschritt

- zu 90 Gew.-%,
- bevorzugt zu 95 Gew.-% und
- besonders bevorzugt zu 100 Gew.-%,

jeweils bezogen auf das Gesamtgewicht der wässrigen Polymerdispersion, gefroren ist.

Durch den Gefrierschritt findet eine Vergröberung der Dispersionsteilchen statt (ein sogenanntes Koagulat wird gebildet), die eine Verbesserung der Abtrennung des flüssigen Wassers bzw. der wässrigen Phase, d.h. einer Fest-Flüssigtrennung, bewirkt bzw. diesen Trennschritt überhaupt erst sinnvoll technisch ermöglicht.

Wasser- und /oder Wasserdampfzugabe:

Das erfindungsgemäße Verfahren enthält zwingend den Schritt der Zugabe von Wasser und/oder Wasserdampf zwischen dem Gefrierschritt und dem Fest-Flüssigtrennungsschritt.

Dieser Schritt der Zugabe von Wasser und/oder Wasserdampf erfolgt erfindungsgemäß bevorzugt durch die Zugabe von Wasser bei der Überführung der gefrorenen wässrigen Polymerdispersion in eine Vorrichtung für den Auftau- und ggf. Sinterschritt (siehe unten; vgl. auch Bezugszeichen (3) in Abbildung 4 und 5)). Dieses auch sogenannte Prozesswasser ermöglicht insbesondere eine leichtere Überführung des Gutes, d.h. der gefrorenen Polymerdispersion. Die Überführung ist insbesondere erleichtert, wenn die wässrige Polymerdispersion nach dem Gefrierschritt zu 100 Gew.-%, bezogen auf das Gesamtgewicht der wässrigen Polymerdispersion, gefroren ist.

Der Schritt der Zugabe von Wasser und/oder Wasserdampf erfolgt insbesondere erfindungsgemäß bevorzugt durch die Zugabe von Wasser und/oder Wasserdampf direkt in die Vorrichtung für den Auftau- und ggf. Sinterschritt (siehe unten; vgl. auch Bezugszeichen (5) in Abbildung 5).

Erfindungsmäßig ganz besonders bevorzugt ist sowohl eine Zugabe von Wasser bei der Überführung der gefrorenen wässrigen Polymerdispersion in eine Vorrichtung für den Auftau- und ggf. Sinterschritt als auch eine Zugabe von Wasser und/oder Wasserdampf direkt in die Vorrichtung für den Auftau- und ggf. Sinterschritt.

Ein Schritt der Zugabe von Wasser und/oder Wasserdampf kann vor, während oder nach einem Auftau- und ggf. Sinterschritt erfolgen, wobei er immer vor dem Fest-Flüssigtrennungsschritt erfolgt.

Optional kann in einem erfindungsgemäßen Verfahren, vorzugsweise in Kombination mit einer der oben beschriebenen bevorzugten Ausführungsformen, Wasser auch zusätzlich in der Dispersionsvorlage, z.B. durch Besprühen der Walze im Falle der Verwendung einer Walzeneismaschine/eines Walzenkühlers, zugegeben werden (in Abbildung 1 ist dieser Vorgang mit dem Bezugszeichen 200 versehen).

Der gewichtsbezogene Feststoffanteil (=Polymer) der wässrigen Polymerdispersion nach Wasser- und /oder Wasserdampfzugabe (= $w_{Polymer, aus}$) liegt unter dem gewichtsbezogenen Feststoffanteil (=Polymer) der gefrorenen wässrigen Polymerdispersion vor Wasser- und /oder Wasserdampfzugabe (= $w_{Polymer}$) und bewegt sich

- im Bereich von 99,5 % - 10 %,
- vorzugsweise im Bereich von 75 % - 25 %,
- bevorzugt im Bereich von 70 % - 30 %,
- ganz bevorzugt im Bereich von 65 % - 35 %,

des gewichtsbezogenen Feststoffanteils (=Polymer) der wässrigen Polymerdispersion vor Wasser- und /oder Wasserdampfzugabe. Unter "gewichtsbezogenem Feststoffanteil" der wässrigen Polymerdispersion ist der Gewichts-Anteil Polymer der wässrigen Polymerdispersion zu verstehen.

Betrachtet man beispielsweise 1000 g wässrige Polymerdispersion mit einem (gewichtsbezogenen) Feststoffanteil (=Polymer) von ursprünglich 41 Gew.-%, also mit 410 g Polymer in den 1000 g Dispersion: dieser Dispersion wird soviel Wasser hinzugefügt, dass der gewichtsbezogene Feststoffanteil (=Polymer) der wässrigen Polymerdispersion danach bei 20,5 Gew.-% liegt (dies entspricht 50 % des ursprünglich vorgelegten gewichtsbezogenen Feststoffanteils von 41 Gew.-%). Um die Reduktion des gewichtsbezogenen Feststoffanteils (=Polymer) der wässrigen Polymerdispersion von 41 Gew.-% auf 20,5 Gew.-% zu erreichen, ist in dem vorliegenden Beispiel eine Wasser- und /oder Wasserdampfzugabe von 1000 g zu den ursprünglich vorliegenden 1000 g wässriger Polymerdispersion nötig (damit liegen die 410 g Polymer in 2000 g Dispersion vor, d.h. der gewichtsbezogene Feststoffanteil (=Polymer) der hergestellten wässrigen Polymerdispersion beträgt 20,5 Gew.-%).

Erfindungsgemäß kann eine Zugabe von Wasser und/oder Wasserdampf weiter an verschiedenen weiteren Stellen des erfindungsgemäßen Verfahrens in Form von Wasser und/oder Wasserdampf (z.B. als Wärmeträger, als Prozesswasser) erfolgen.

Auftau- und optionaler Sinterschritt:

In einer weiter bevorzugten Ausführungsform des erfindungsgemäßen Verfahrens umfasst dieses zusätzlich einen Auftau- und optional einen weiteren Sinterschritt.

Als "Auftauschritt" wird im Rahmen der vorliegenden Erfindung der Vorgang bezeichnet, bei dem die zumindest teilweise gefrorene wässrige Polymerdispersion aus dem festen Aggregatzustand in den flüssigen Aggregatzustand gebracht wird.

Als "Sinterschritt" wird im Rahmen der vorliegenden Erfindung der Vorgang bezeichnet, der bei einer Sintertemperatur T (Temperatur, bei der ein Stabilisierungsschritt stattfindet) erfolgt, wobei die Sintertemperatur T

- im Bereich von $T \geq T^G$ - 50 K,
- vorzugweise im Bereich von $T \geq T^G$ - 30 K,
- bevorzugt im Bereich von $T^G$ - 15 K $\leq T \leq T^G$ + 5 K

liegt. Bei diesen Bereichsangaben steht $T^G$ für die Glastemperatur der äußeren Schale/Schicht des dispergierten Polymermaterials, d.h. der wässrigen Polymerdispersion.

Ein zusätzlicher Sinterschritt ist in einem erfindungsgemäßen Verfahren optional. Auf einen zusätzlichen Sinterschritt kann verzichtet werden, wenn durch den Gefrierschritt und den folgenden Auftauschritt eine Sinterung automatisch stattfindet. Als Ergebnis der Sinterung liegt die wässrige Polymerdispersion in flüssiger Phase vor, wobei die Teilchen der Polymerdispersion verfilmt sind. Im Rahmen der vorliegenden Erfindung wird unter Sintern auch eine Stabilisierung durch Nacherhitzen verstanden.

Der Zweck des Sinterns liegt dabei vor allem in der Stabilisierung der durch Gefrierkoagulation erzeugten Agglomerate, ggf. kann hier noch eine Kornvergröberung erzielt werden.

Der Auftau- bzw. der optionale Sinterschritt kann in jedem technischen Gerät, welches zum Auftauen und Sintern von gefrorenem Material, Flüssigkeiten oder Dispersionen geeignet ist, erfolgen.

Beispiele für einsetzbare, kommerziell erhältliche Geräte sind

- Kessel oder Reaktoren (gerührt, nicht gerührt, kontinuierlich, semi-kontinuierlich, batch) mit/ohne Dampfeinspeisung - das Eis tritt hierbei in eine temperierte, wässrige Lösung ein,
- stehende Rohre (mit/ohne Temperierung),
- Wärmetauscher (z.B. Platten-, Rohrbündel- oder Schneckenwärmetauscher),
- Trocken- bzw. Temperschränke/räume und
- Beheizbare Förderbänder oder Vibrationsrinnen oder andere Förderapparate für Schüttgüter oder Schlämme (z.B. Schneckenförderer).

In einer bevorzugten Ausführungsform des erfindungsgemäßen Verfahrens umfasst das Verfahren einen Auftau- und einen Sinterschritt, wobei beide Schritte in einer Vorrichtung durchgeführt werden. Bei dieser bevorzugten Ausführungsform ist es weiter besonders bevorzugt, wenn die Vorrichtung für den Auftau- und den Sinterschritt kontinuierlich betrieben wird.

Erfindungsgemäß ist es weiter bevorzugt, dass zumindest die eine oder eine weitere Wasser- und/oder Wasserdampfzugabe während des Auftau- und/oder Sinterschrittes erfolgt. Weiter bevorzugt erfolgt die Wasser- und/oder Wasserdampfzugabe bei einem Auftau- und/oder einem Sinterschritt in einem Kessel oder Reaktor durch Wasserdampfeinspeisung.

Nach Auftau- und ggf. Sinterschritt liegen die Teilchen der wässrigen Polymerdispersion als Koagulat vor.

Fest-Flüssigtrennungsschritt:

Der Fest-Flüssigtrennungsschritt wird durchgeführt, indem das aufgetaute bzw. gesinterte Koagulat in einen Feststoffanteil (mit Restfeuchte) und einen Flüssigkeitsanteil (mit Feststoffanteil) mechanisch (z.B. durch Zentrifugation) und optional zusätzlich thermisch (z.B. durch Trocknung) getrennt wird.

Die Abtrennung des Feststoffanteils aus dem Koagulat kann in jedem technischen Gerät, welches hierzu geeignet ist, erfolgen.

Beispiele für erfindungsgemäß einsetzbare, kommerziell erhältliche Geräte sind

- Zentrifugen (z.B. horizontale oder vertikale Schälzentrifugen, Schubzentrifugen, Becherzentrifugen etc.),
- Dekanter,
- Zentrifugaltrockner oder andere
- Trockenkonzepte, bei denen eine mechanische flüssige Abtrennung des Wassers bzw. der wässrigen Phase erfolgt,
- Wärmetauscherkonzepte und
- Abpressanlagen.

Vorzugsweise erfolgt in einem erfindungsgemäßen Verfahren der Fest-Flüssigtrennungsschritt in einer Zentrifuge.

Zur Charakterisierung des Abtrennvorgangs wird der Trennfaktor P als Verhältnis der mechanisch abgetrennten Wassermenge bzw. der Menge der abgetrennten wässrigen Phase $m_{H2O,mech}$ zur gesamten Wassermenge (= Summe des Wassers bzw. der wässrigen Phase aus der ursprünglich eingesetzten wässrigen Polymerdispersion und dem zugesetzten Wasser und/oder Wasserdampf) $m_{H2O,tot}$ eingeführt:

$$P = \frac{m_{H2O,mech}}{m_{H2O,tot}} \tag{7}$$

Das erfindungsgemäße Verfahren, vorzugsweise nach zumindest einer der vorherigen bevorzugten Ausführungsformen, ist dadurch gekennzeichnet, dass der Fest-Flüssigtrennungsschritt durch einen Trennfaktor P gemäß der Gleichung (7) charakterisiert ist, wobei $m_{H2O,mech}$ für die mechanisch abgetrennte Wassermenge bzw. die Menge der abgetrennten wässrigen Phase und $m_{H2O,tot}$ für die gesamte Wassermenge als Summe des Wassers bzw. der wässrigen Phase aus der ursprünglich eingesetzten wässrigen Polymerdispersion und des zugesetzten Wassers und/oder Wasserdampfs steht, und wobei wobei $P \geq 0,55$, vorzugsweise $\geq 0,8$, bevorzugt $\geq 0,93$, weiter bevorzugt $\geq 0,95$, ist.

Compoundierungsschritt:

Nach Durchlaufen des Fest-Flüssigtrennungsschrittes kann der abgetrennte Feststoffanteil (mit Restfeuchte; = das restfeuchte Material M) gemäß einer bevorzugten Ausführungsform direkt unter optionaler Zugabe weiterer Additive in einem Compoundierungsschritt, z.B. zu einem Extrudat u/o. einem Granulat weiterverarbeitet werden.

Der Compoundierungsschritt kann in jedem technischen Gerät, welches hierzu geeignet ist, erfolgen.

Beispiele für erfindungsgemäß einsetzbare, kommerziell erhältliche Geräte sind

- Extruder (Planetwalzenextruder, Einschneckenextruder, Doppelschneckenextruder, gleich- oder gegenläufig),
- Statische Mischer,
- Kneter oder
- Walzenstühle,

optional mit anschließender Granulation, Heiß- oder Kaltabschlag.

In einer bevorzugten Ausführungsform des erfindungsgemäßen Verfahrens, erfolgt nach dem Fest-Flüssigtrennungsschritt ein Compoundierschritt, vorzugsweise in einem 2-Schnecken-Extruder, mit anschließender Granulation.

In einer anderen weiteren bevorzugten Ausführungsform des erfindungsgemäßen Verfahrens erfolgt nach dem Fest-Flüssigtrennungsschritt ein Compoundierschritt durch einen Extrusionsschritt in Form der Herstellung von Platten oder Folien.

Die weiteren Additive, die z.B. bei einem Extrusionsschritt und/oder einem Granulationsschritt in einem erfindungsgemäßen Verfahren dazugegeben werden können, sind vorzugsweise ausgewählt aus der Gruppe bestehend aus (Co-)Polymeren auf (Meth)acrylatbasis, insbesondere PMMA-Formmassen in Granulatform; UV-Stabilisatorpaketen; Gleitmitteln; Farbstoffen, bevorzugt Farbstoffe zur transparenten Einfärbung; Verarbeitungshilfsmitteln; Antioxidantien und Stabilisatoren.

Besonders bevorzugt wird ein UV-Stabilisatorpaket dazugegeben. Bevorzugt setzt sich dieses Stabilisatorpaket aus UV-Absorbern und UV-Stabilisatoren zusammen. Bei den UV-Stabilisatoren handelt es sich dabei in der Regel um sterisch gehinderten Amine (Hindered Amine Light Stabilizer; HALS-Verbindungen). Bei den UV-Absorbern kann es sich um Benzophenone, Salicylsäureester, Zimtsäureester, Oxalanilide, Benzoxazinone, Hydroxyphenylbenztriazole, Triazine, Benztriazole oder Benzyliden-Malonate handeln. Alternativ können UV-Absorber auch mittels einer polymerisationsaktiven Gruppe in das Matrixmaterial einpolymerisiert sein.

Trocknungsschritt und/oder Kompaktierungsschritt (optional):

In einer speziellen Ausführungsform des erfindungsgemäßen Verfahrens durchläuft der abgetrennte Feststoffanteil (mit Restfeuchte) nach dem Fest-Flüssigtrennungsschritt alternativ zum direkten Compoundierschritt noch einen zusätzlichen Trocknungsschritt und/oder einen zusätzlichen Kompaktierungsschritt.

Der alternative Trocknungsschritt kann zur weiteren Absenkung der Restfeuchte des abgetrennten Feststoffanteils genutzt werden. Der ebenfalls zum direkten Compoundierschritt alternative Kompaktierungsschritt kann zur zusätzlichen Formgebung dem Fest-Flüssigtrennungsschritt nachgeschaltet werden. Erfindungsgemäß ist weiterhin statt des direkten Compoundierens die Kombination aus

a) einem Trocknungsschritt zur weiteren Absenkung der Restfeuchte und

b) einem diesem Trocknungsschritt nachgeschalteten Kompaktierungsschritt zur zusätzlichen Formgebung bevorzugt.

Die Schritte Trocknung und Kompaktierung können in jedem Gerät, welches hierzu geeignet ist, erfolgen.

Beispiele für zur Trocknung einsetzbare, kommerziell erhältliche Geräte sind

- (Vakuum-)Kontakttrockner (Schaufel-, Scheiben-, Wendel-, Teller-),
- Konvektionstrockner (Fließbett-, Flugstrom-) und
- Wendelwuchtförderer.

Beispiele für zur Kompaktierung einsetzbare, kommerziell erhältliche Geräte sind

- Tablettiermaschinen,
- Ringmatrizenpressen und
- Walzenkompaktoren.

Unter den Schritt einer Kompaktierung fällt im erweiterten Sinne auch

- eine Wirbelschichtgranulation und
- ein Aufschmelzen des abgetrennten Feststoffanteils (mit Restfeuchte) im Extruder und anschließende Granulation.

Im Rahmen der vorliegenden Erfindung liegt eine bevorzugte Ausführungsform des erfindungsgemäßen Verfahrens vor, wenn zwischen dem Fest-Flüssigtrennungsschritt und einem Compoundierschritt ein Trocknungsschritt und/oder ein Kompaktierungsschritt erfolgt.

Eine ganz besonders bevorzugte Ausführungsform des erfindungsgemäßen Verfahrens ist dadurch gekennzeichnet, dass das Verfahren die folgenden aufeinanderfolgenden Schritte umfasst:

- einen Gefrierschritt mit einer Gefrierrate G, wobei G im Bereich von 1 - 100 cm/h liegt,
- eine Zugabe von Wasser und/oder Wasserdampf nach dem Gefrierschritt und vor dem Fest-Flüssigtrennungsschritt,
- einen Auftauschritt unter Wärmezufuhr durch Wasserdampf und optional einen Sinterschritt mit einer Sintertemperatur T für die gilt $T \geq T^G - 50$ K,
- einen Fest-Flüssigtrennungsschritt in einer Zentrifuge, wobei der Fest-Flüssigtrennungsschritt durch einen Trennfaktor P gemäß der Formel

$$P = \frac{m_{H2O,mech}}{m_{H2O,tot}}$$

charakterisiert ist, wobei $m_{H2O,mech}$ für die mechanisch abgetrennte Wassermenge, das heißt, für die Menge der abgetrennten wässrigen Phase, und $m_{H2O,tot}$ für die gesamte Wassermenge als Summe des Wassers, das heißt, der wässrigen Phase aus der ursprünglich eingesetzten wässrigen Polymerdispersion und des zugesetzten Wassers und/oder Wasserdampfs, steht, und wobei $P \geq 0,8$ ist,

- optional einen Trocknungsschritt und/oder einen Kompaktierungsschritt,
- einen Granulations- oder Extrusionsschritt unter Zugabe weiterer Additive, insbesondere von (Co-)Polymeren auf (Meth)acrylatbasis, UV-Absorbern und/oder Gleitmittel(n).

Eine weitere ganz besonders bevorzugte Ausführungsform des erfindungsgemäßen Verfahrens ist dadurch gekennzeichnet, dass das Verfahren die folgenden aufeinanderfolgenden Schritte umfasst:

- einen Gefrierschritt mit einer Gefrierrate G, wobei G im Bereich von 9 - 55 cm/h liegt,
- eine Zugabe von Wasser und/oder Wasserdampf nach dem Gefrierschritt und vor dem Fest-Flüssigtrennungsschritt,
- einen Auftauschritt unter Wärmezufuhr durch Wasserdampf und optional einen Sinterschritt mit einer Sintertemperatur T für die gilt $T^G - 15\,K \leq T \leq T^G + 5\,K$,
- einen Fest-Flüssigtrennungsschritt in einer Zentrifuge, wobei der Fest-Flüssigtrennungsschritt durch einen Trennfaktor P gemäß der Formel

$$P = \frac{m_{H2O,mech}}{m_{H2O,tot}}$$

charakterisiert ist, wobei $m_{H2O,mech}$ für die mechanisch abgetrennte Wassermenge, das heißt, für die Menge der abgetrennten wässrigen Phase, und $m_{H2O,tot}$ für die gesamte Wassermenge als Summe des Wassers, das heißt, der wässrigen Phase aus der ursprünglich eingesetzten wässrigen Polymerdispersion und des zugesetzten Wassers und/oder Wasserdampfs, steht, und wobei $P \geq 0,95$ ist,

- einen Trocknungsschritt und/oder einen Kompaktierungsschritt,
- einen Granulations- oder Extrusionsschritt unter Zugabe weiterer Additive, insbesondere von (Co-)Polymeren auf (Meth)acrylatbasis, UV-Absorbern und/oder Gleitmittel(n), wobei der Gefrierschritt über eine Walzeneismaschine erfolgt.

Als Verfahrensprodukt (= Produkt) wird der abgetrennte Feststoffanteil (mit Restfeuchte) ggf. mit weiterer Aufarbeitung durch Compoundierungsschritt und optional weiterem Trocknungsschritt und/oder Kompaktierungsschritt erhalten.

Produktkenngröße:

Eine Kenngröße des erhaltenen Verfahrensproduktes (= Produkt) ist die Restfeuchte $w_{H2O}$ des Produktes am Ende des Prozesses (d.h. nach dem Fest-Flüssigtrennungsschritt und optional weiterem Trocknungsschritt und/oder optional weiterem Kompaktierungsschritt)

$$w_{H2O} = \frac{m_{H2O}}{m_{Polymer} + m_{H2O}} \tag{8}$$

wobei $m_{H2O}$ hierbei für die Masse des im Produkt enthaltenen Wassers und $m_{Polymer}$ für die Masse des enthaltenen Polymers steht.

Wässrige Polymerdispersion:

Für das erfindungsgemäße Verfahren kann jede beliebige wässrige Polymerdispersion eingesetzt werden. Im Rahmen der vorliegenden Erfindung wird unter einer wässrigen Polymerdispersion auch eine Mischung von zwei oder mehreren wässrigen Polymerdispersionen verstanden.

In einer bevorzugten Ausführungsform des erfindungsgemäßen Verfahrens, vorzugsweise nach zumindest einer der vorherigen bevorzugten Ausführungsformen, handelt es sich um eine wässrige Polymerdispersion auf (Meth-)Acrylat-Basis, vorzugsweise auf Polymethacrylat-Basis, bevorzugt auf PMMA (Polymethylmethacrylat) -Basis. Der Ausdruck (Meth)acrylat umfasst Methacrylat und Acrylat sowie Mischungen aus beiden.

Im Sinne der vorliegenden Erfindung werden wässrige Polymerdispersionen enthaltend einen, zwei oder mehrere Schlagzähmodifier bevorzugt eingesetzt. Schlagzähmodifier sind Polymerteilchen, die z.B. durch Perlpolymerisation oder durch Emulsionspolymerisation hergestellt werden und am Ende des Syntheseschritts in Form einer wässrigen Polymerdispersion vorliegen. Diese wässrige Polymerdispersion enthält neben dem Polymeranteil auch polare, wasserlösliche Hilfsstoffe (Emulgatoren, Initiatoren und andere Redoxkomponenten etc.), die für die Durchführung des Polymerisationsschritts benötigt werden.

Schlagzähmodifier bestehen in der Regel aus mindestens 40, bevorzugt 50-70 Gew.-% Methylmethacrylat, 20 bis 45, bevorzugt 25 bis 42 Gew.-% Butylacrylat sowie 0,1 bis 2, bevorzugt 0,5 bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 5 Gew.-% an C1-C4-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei- oder einen dreischichtigen Kern-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen dieser Emulsionspolymerisate liegen im Bereich von 100 - 500 nm, bevorzugt 200 - 400 nm.

Weiter bevorzugte Schlagzähmodifier sind zweiphasige Schlagzähmodifier gemäß EP 0 528 196 A1, die insbesondere zur Folienherstellung verwendet werden, jedoch nicht auf diese beschränkt sind. EP 0 528 196 A1 verwendet ein zweiphasiges, schlagzähmodifiziertes Polymerisat aus:

a1) 10 Gew.-% bis 95 Gew.-% einer zusammenhängenden Hartphase mit einer Glasübergangstemperatur $T_{mg}$ über 70°C, aufgebaut aus

a11) 80 Gew.-% bis 100 Gew.-% (bezogen auf a1) Methylmethacrylat und
a12) 0 Gew.-% bis 20 Gew.-% eines oder mehrerer weiterer ethylenisch ungesattigter, radikalisch polymerisierbarer Monomeren, und

a2) 90 Gew.-% bis 5 Gew.-% einer in der Hartphase verteilten Zähphase mit einer Glasübergangstemperatur $T_{mg}$ unter -10°C, aufgebaut aus

a21) 50 Gew.-% bis 99,5 Gew.-% eines $C_1$-$C_{10}$ Alkylacrylats (bezogen auf a2)
a22) 0,5 Gew.-% bis 5 Gew.-% eines vernetzenden Monomeren mit zwei oder mehr ethylenisch ungesättigten, radikalisch polymerisierbaren Resten, und
a23) gegebenenfalls weiteren ethylenisch ungesättigten, radikalisch polymerisierbaren Monomeren,

wobei wenigstens 15 Gew.-% der Hartphase a1) mit der Zähphase a2) kovalent verknüpft sind.

Dieses zweiphasige Schlagzähmodifizierungsmittel kann durch eine zweistufige Emulsionspolymerisation in Wasser erzeugt werden, wie z. B. in DE-A 38 42 796 beschrieben. In der ersten Stufe wird die Zähphase a2) erzeugt, die zu mindestens 50 Gew.-%, vorzugsweise zu mehr als 80 Gew.-%, aus niederen Alkylacrylaten aufgebaut ist, woraus sich eine Glasübergangstemperatur $T_{mg}$ dieser Phase von unter -10°C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropantriacrylat und-trimethacrylat sowie Pentaerythrit-tetraacrylat und -tetramethacrylat genannt. Weitere Beispiele sind hierzu in US 4,513,118 angegeben.

Beispiele für erfindungsgemäß bevorzugte Schlagzähmodifier sind ebenfalls z.B.

- 2-phasige Schlagzähmodifier auf Butylacrylat-Basis, wie z.B. in DE 10 2005 062 687 A1 und
- 3-phasige Schlagzähmodifier auf Butylacrylat-Basis, wie z.B. in EP 1 332 166 B1 offenbart.

Ein weiterer Gegenstand der vorliegenden Erfindung ist ein Verfahren zur Herstellung eines Halbzeuges, einer Formmasse oder eines Formkörpers, dadurch gekennzeichnet, dass ein Verfahren nach zumindest einer der oben beschriebenen Ausführungsformen eingesetzt wird. Vorzugsweise ist das Halbzeug, die Formmasse oder der Formkörper transparent. Vorzugsweise handelt es sich bei den Halbzeugen um Platten oder Folien, insbesondere Witterungsschutzfolien.

Unter "transparent" wird im Rahmen der vorliegenden Erfindung verstanden, dass bei einer Dicke von 3 mm eine Transmission von mindestens 85 % vorliegt. Weiter vorzugsweise weisen die transparenten Halbzeuge bei einer Dicke von 3 mm einen Haze gemäß ASTM 1003 (1997) von < 20%, vorzugsweise < 15%, nach Heißwasserlagerung bei 70° C, vorzugsweise bei 80° C, auf.

Ein weiterer Gegenstand der vorliegenden Erfindung ist die Verwendung des Schrittes:

- Zugabe von Wasser und/oder Wasserdampf,

in einem kontinuierlichen oder semi-kontinuierlichen Gefrierkoagulationsverfahren für eine wässrige Polymerdispersion umfassend einen Gefrierschritt und einen Fest-Flüssigtrennungsschritt, wobei die Zugabe von Wasser und/oder Wasserdampf zwischen dem Gefrierschritt und dem Fest-Flüssigtrennungsschritt erfolgt, zur Verbesserung der optischen Qualität des Verfahrensproduktes, insbesondere zur Verbesserung der Haze-Werte.

In einer bevorzugten Ausführungsform liefert das erfindungsgemäße Verfahren ein Produkt in Form von Pulver.

In einer weiteren bevorzugten Ausführungsform liefert das erfindungsgemäße Verfahren einen Formkörper, wobei der Formkörper vorzugsweise transparent ist. Vorzugsweise ist der erhaltene Formkörper ein Halbzeug, vorzugsweise ein transparentes Halbzeug, hergestellt mit Verfahrensprodukt aus dem erfindungsgemäßen Verfahren, das einen Haze gemäß ASTM 1003 (1997) von < 20%, vorzugsweise < 15%, nach Heißwasserlagerung bei 70° C, vorzugsweise nach Heißwasserlagerung bei 80° C, aufweist.

Die nachfolgenden Beispiele dienen der näheren Erläuterung und dem besseren Verständnis der vorliegenden Erfindung, schränken diese bzw. deren Umfang jedoch in keiner Weise ein.

Beispiele:

Für die Beispiele wurden folgende wässrige Polymerdispersionen (Dispersionen 1-3) hergestellt: In einem Polymerisationsgefäß mit Rührer, Außenkühlung und Zulaufgefäß wurden 60 Gew.-Teile einer Wasserphase vorgelegt, die 1 Gew.-% Natriumlaurylsulfat, 0,15 Gew.-% Natriumhydroxymethylsulfinat, 0,02 Gew.-% Essigsäure und 0,008 Gew.-% Eisen-II-sulfat enthielt. Innerhalb von 2 Stunden wurden unter Rühren bei einer Temperatur von 55°C 50 Gewichtsteile einer Emulsion I zudosiert. Anschließend wurden während weiterer 2 Stunden 100 Gew.-Teile der Emulsion II zudosiert. Nach Zulaufende wurde die Dispersion auf 20°C abgekühlt und über VA-Stahl mit einer Maschenweite ~100$\mu$m filtriert. Die verwendeten Emulsionen I und II wurden durch Emulgieren der im Folgenden angegebenen Gewichtsanteile der nachfolgenden Bestandteile als jeweils 60%-ige Emulsion erhalten:

| | Dispersion 1 | Dispersion 2 | Dispersion 3 |
|---|---|---|---|
| 60%-ige Emulsion I | | | |
| Butylacrylat | 98 | 98 | 99 |
| Allylmethacrylat | 2,0 | 2,0 | 1 |
| tert.-Butylhydroperoxid (70%ige alkoholisch-wässrige Lösung) | 0,1 | 0,1 | 0,1 |
| Natriumlaurylsulfat (0,15%ige wäßrige Lösung) | 67 | 67 | 67 |
| | | | |
| 60%-ige Emulsion II | | | |
| Methylmethacrylat | 92 | 88 | 98,5 |
| Butylacrylat | 8,0 | 12 | -- |
| Ethylacrylat | -- | -- | 1,5 |
| Dodecylmercaptan | 1,0 | 1,0 | 0,5 |
| tert.-Butylhydroperoxid (70%ige alkoholisch-wässrige Lösung) | 0,1 | 0,1 | 0,1 |
| Natriumlaurylsulfat (0,15%ige wäßrige Lösung) | 100 | 100 | 100 |

Die erhaltenen wässrigen Polymerdispersionen wurden auf eine Polymerkonzentration $w_{Polymer,aus}$ von 41 Gew.-% (Dispersionen 1 und 2) bzw. 40 Gew.-% (Dispersion 3) eingestellt. Bei den vorliegenden Beispielen wurden als charakteristische Kenngrößen für das Verfahren der Trennfaktor P (Gleichung (7)) und die Gefrierrate G* (Gleichung (2)) und für das Verfahrensprodukt die Restfeuchte $w_{H2O}$ (Gleichung (8)) ermittelt.

Für die Ermittlung von Haze-Werten im Sinne der vorliegenden Erfindung und insbesondere bei den angeführten Beispielen wurde das jeweilige Verfahrensprodukt wie folgt compoundiert: das jeweilige Verfahrensprodukt wurde in den Trichter eines Einschneckenextruder Stork mit 35 mm Schneckendurchmesser gegeben. Die Schmelzetemperatur betrug 235°C. Aus der Extruderdüse wurden Stränge abgezogen, im Wasserbad gekühlt und zu Gleichkorngranulat granuliert. Nach der Compoundierung wurden vom erhaltenen Granulat auf einer Spritzgießmaschine Battenfeld BA gemäß ISO 294 Prüfkörper mit den Maßen 65 mm x 40 mm x 3 mm bei 250°C spritzgegossen. Diese Prüfkörper wurden gemäß der Messmethode ASTM D 1003 (1997) mit einem Hazemeter BYK Gardner Hazegard-plus bei 23 °C geprüft, sowohl im Originalzustand ("Haze vorher") als auch nach erfolgter Heißwasserlagerung. Für die Bestimmung der Haze-Werte nach Heißwasserlagerung bei 70°C ("Haze 70°C") und 80°C ("Haze 80°C") fand für 24h eine Lagerung der Prüfkörper im temperierten destillierten Wasser bei 70°C bzw. 80°C statt, wobei der Prüfkörper stets vollständig mit Wasser bedeckt war.

1.1. Vergleichsbeispiel 1

Aufgearbeitet wurde die Dispersion 1 mit dem in Abbildung 3 dargestellten Verfahren durch kontinuierliche Gefrierkoagulation mit einer Walzeneismaschine der Firma HIGEL, Typ HEC 400 (schematisch dargestellt in Abbildung 2) mit einem Walzenradius $r_W$ = 0.09 m und einer Walzenbreite $b_W$= 0.19 m, inklusive Auftauen/Sintern (Batch) und Zentrifugation.

Dabei wurden die Walzendrehzahl $n_W$, die Walzentemperatur $T_W$ und die Eintauchtiefe $h_{eintauch}$ variiert und jeweils der Massenstrom der gefrorenen Dispersion $\dot{m}_{Disp}$ bestimmt. Die Gefrierrate G* wurde über die Gleichungen (2) - (6) berechnet.

Nach erfolgtem Gefrierschritt wurde die Dispersion anschließend in einem Behälter in einem Trockenschrank mit einer Durchschnittstemperatur von $T_{TS}$ = 80°C - 100°C und einer Verweilzeit von $\tau_{TS}$ = 24 h aufgetaut und gesintert und anschließend zentrifugiert.

Als Zentrifuge wurde eine Wäscheschleuder der Firma Thomas, 57290 Neunkirchen, Typ 776 SEK 203 mit einer Trommel mit Innendurchmesser $d_{i,Z}$ = 0.24 m, Höhe $h_Z$ = 0.32 m, Filtertuch aus Polypropylen mit Maschenweite = 90 $\mu$m, max. Füllmenge = 4.5 kg und einer (max.) Drehzahl $n_Z$ = 2800/min (Angaben Hersteller) verwendet. Die Dispersion wurde mit einer Schleuderzeit von $\tau_Z$ = 5 min. zentrifugiert. Die dabei verwendete Menge lag bei $m_Z$ = 3 kg (max.).

Nach der Zentrifugation wurde die Restfeuchte $w_{H2O}$ des abgetrennten Feststoffanteils (= restfeuchtes Material M) bestimmt.

Die Betriebsparameter und Ergebnisse sind in Tabelle 1 zusammengefasst.

Tab. 1: Betriebsparameter und Versuchsergebnisse zu Vergleichsbeispiel 1

| Nr. | $n_W$ 1/min | $h_{Eintauch}$ mm | $T_W$ °C | $\dot{m}_{Disp}$ kg/h | $w_{H2O}$ (von M) kg/kg | G* cm/h |
|---|---|---|---|---|---|---|
| 1.1 | 4 | 60 | -23 | 20.0 | 20.0% | 54 |
| 1.2 | 4 | 110 | -23 | 25.4 | 16.9% | 45 |
| 1.3 | 1.8 | 60 | -28 | 14.9 | 18.7% | 40 |
| 1.4 | 4 | 130 | -24 | 25.1 | 17.8% | 39 |
| 1.5 | 1.8 | 110 | -26 | 17.6 | 17.1% | 31 |
| 1.6 | 1.8 | 110 | -29 | 17.4 | 16.4% | 30 |
| 1.7 | 1.8 | 110 | -24 | 17.4 | 16.0% | 30 |
| 1.8 | 1.8 | 110 | -29 | 17.4 | 15.2% | 30 |
| 1.9 | 1.8 | 130 | -28 | 18.9 | 14.9% | 29 |
| 1.10 | 1.25 | 110 | -24 | 15.1 | 14.9% | 26 |
| 1.11 | 1.25 | 110 | -22 | 15.1 | 12.9% | 26 |
| 1.12 | 1 | 130 | -21 | 17.1 | 11.8% | 26 |
| 1.13 | 1 | 130 | -30 | 15.2 | 11.5% | 23 |
| 1.14 | 0.65 | 130 | -29 | 14.3 | 9.7% | 22 |
| 1.15 | 0.65 | 130 | -27 | 13.6 | 11.6% | 21 |
| 1.16 | 0.65 | 130 | -28 | 13.8 | 10.9% | 21 |
| 1.17 | 0.65 | 130 | -28 | 13.8 | 10.7% | 21 |
| 1.18 | 0.65 | 130 | -32 | 13.9 | 10.4% | 21 |
| 1.19 | 0.65 | 130 | -29 | 13.8 | 9.2% | 21 |
| 1.20 | 0.65 | 130 | -21 | 12.4 | 11.7% | 19 |
| 1.21 | 0.65 | 130 | -28 | 12.5 | 10.0% | 19 |
| 1.22 | 0.71 | 135 | -18 | 9.9 | 10.5% | 15 |
| 1.23 | 0.71 | 135 | -8 | 6.0 | 6.3% | 9 |
| 1.24 | 0.55 | 135 | -8 | 5.3 | 5.4% | 8 |
| 1.25 | 0.55 | 120 | -7 | 4.1 | 5.3% | 7 |

**Vergleichsbeispiel 2**

Aufgearbeitet wurde die Dispersion 2 mit dem in Vergleichsbeispiel 1 beschriebenen Verfahren. Dabei wurden die Walzendrehzahl $n_W$, die Walzentemperatur $T_W$ und die Eintauchtiefe $h_{Eintauch}$ variiert und jeweils der Massenstrom

der gefrorenen Dispersion $\dot{m}_{Disp}$ bestimmt. Die Gefrierrate G* wurde über die Gleichungen (2) - (6) berechnet.

Zusätzlich wurde zum weiteren Vergleich eine Probe mit einer sehr niedrigen Gefrierrate durch Einfrieren über 48 h in einem 10L-PE-Weithals-Behälter mit einem Innendurchmesser von 22 cm bei -20°C (diskontinuierliches Verfahren) hergestellt (Behältergefrieren Versuch 2.1).

Für die Versuche 2.2 - 2.6 erfolgte das Auftauen und Sintern wie in Vergleichsbeispiel 1 beschrieben. Die Zentrifugation erfolgte so lange, bis kein Filtratstrom mehr beobachtet wurde (max. 10 min.). Der abgetrennte Feststoffanteil (= restfeuchtes Material M) wurde im Trockenschrank bei 50°C solange getrocknet, bis eine Restfeuchte von $w_{H2O}$ = max. ca. 1 Gew.-% erreicht wurde.

Für die Versuche 2.2 - 2.5 wurden aus getrocknetem Material (mit einer Restfeuchte von $w_{H2O}$ = max. ca. 1 Gew.-% = $M_{trocken}$) durch die oben beschriebene Compoundierung und anschließendem Spritzguss Prüfkörper mit einer Dicke von 3 mm hergestellt. Bei diesen Prüfkörpern wurden die Haze-Werte ermittelt.

In einem Fall (Versuch 2.6) wurde das getrocknete Material $M_{trocken}$ mit Wasser gewaschen und der Haze nach erneuter, analoger Zentrifugation und Trocknung an aus diesem Material hergestellten Prüfkörpern bestimmt.

Die Betriebsparameter und Ergebnisse der Vergleichsbeispiele 2 sind in Tabelle 2 zusammengefasst.

Aus den Ergebnissen der Versuche ist zu erkennen, dass mit steigender Gefrierrate die Haze-Werte nach Heißwasserlagerung bei 70 und 80°C im getrockneten Material $M_{trocken}$ zunehmen. Durch ein Waschen nach erster Zentrifugation und Trocknung auf eine Restfeuchte von $w_{H2O}$ = max. ca. 1 Gew.-% mit nachgeschalteter zweiter Zentrifugation und Trocknung auf eine Restfeuchte von $w_{H2O}$ = max. ca. 1 Gew.-% wurde keine weitere Verbesserung der Haze-Werte erreicht (vgl. Probe 2.5 und Probe 2.6 (= Probe wie Probe 2.5 jedoch nach zusätzlichem Waschschritt wie oben beschrieben) in Tabelle 2).

Tab. 2 Betriebsparameter und Versuchsergebnisse zu Vergleichsbeispiel 2

| Nr. | | HAZE vorher | HAZE 70 °C | HAZE 80 °C |
|---|---|---|---|---|
| 2.1 | Behältergefrieren | 3% | 24% | 44% |

| Nr. | $n_W$ 1/min | $h_{Eintauch}$ mm | $T_W$ °C | $\dot{m}_{Disp}$ kg/h | HAZE vorher | HAZE 70 °C | HAZE 80 °C | G* cm/h |
|---|---|---|---|---|---|---|---|---|
| 2.2 | 0.55 | 135 | -9 | 7 | 2% | 59% | 75% | 11 |
| 2.3 | 0.55 | 135 | -20 | 11 | 2% | 52% | 66% | 16 |
| 2.4 | 2.5 | 135 | -19 | 21 | 2% | 70% | 82% | 31 |
| 2.5 | 2.5 | 60 | -19 | 17 | 2% | 74% | 91% | 45 |
| 2.6 | 2.5 | 60 | -19 | 17 | 2% | 78% | 90% | 45 |

**Vergleichsbeispiel 3**

Aufgearbeitet wurde die Dispersion 2 mit dem in Vergleichsbeispiel 1 beschriebenen Verfahren mit konstanter Walzendrehzahl $n_W$, konstanter Walzentemperatur $T_W$, konstanter Eintauchtiefe $h_{eintauch}$ und damit konstanter Gefrierrate G*. Der Massenstrom der gefrorenen Dispersion $\dot{m}_{Disp}$ wurde bestimmt und die Gefrierrate G* über die Gleichungen (2) - (6) berechnet.

Die aufgearbeitete Dispersion wurde aufgetaut und gesintert wie in Vergleichsbeispiel 1 beschrieben.

Im Gegensatz zu den vorhergehenden Versuchsreihen (Vergleichsbeispiele 1 und 2) wurden bei der Zentrifugation (Zentrifuge gemäß den Vergleichsbeispielen 1 und 2) unterschiedliche Anteile P der wässrigen Lösung abgetrennt. Dies erfolgte durch die Variation der Schleuderzeit $\tau_{WS}$. Anschließend wurde der jeweilige Wert für die Restfeuchte $w_{H2O}$ des jeweils abgetrennten Feststoffanteils (= restfeuchtes Material M) bestimmt.

Das restfeuchte Material M wurde danach im Trockenschrank bei 50°C auf eine Restfeuchte von $w_{H2O}$ = ca. 1 Gew.-% getrocknet. Für die Versuche 3.1 - 3.3 wurden aus getrocknetem Material (mit einer Restfeuchte von $w_{H2O}$ = max. ca. 1 Gew.-% = $M_{trocken}$) durch die oben beschriebene Compoundierung und anschließendem Spritzguss Prüfkörper mit einer Dicke von 3 mm hergestellt. Bei diesen Prüfkörpern wurden die Haze-Werte ermittelt.

In Tabelle 3 sind die Ergebnisse des Versuchs 2.2 aus Vergleichsbeispiel 2, bei dem bei einer Schleuderzeit von $\tau_{WS}$ = 5 min. die Gleichgewichtseinstellung erreicht wurde (Abschätzung $w_{H2O}$ = ca. 10 Gew.-%), den Ergebnissen der Versuche 3.1 - 3.3 gegenübergestellt, bei denen durch variable Zentrifugationszeiten und z. T. Wiederzugabe von etwas Filtrat höhere, definierte Restfeuchten - vor der Trocknung auf eine Restfeuchte von $w_{H2O}$ = ca. 1 Gew.-% im Trockenschrank - eingestellt wurden. Bei Versuch 3.3 erfolgte keine mechanische Fest-Flüssigtrennung (d.h. eine Zentrifugation erfolgte nicht), sondern die Restfeuchte von $w_{H2O}$ = ca. 1 Gew.-% wurde ausschließlich über Trocknung erzielt.

Die Ergebnisse zeigen, dass bei konstanter Gefrierrate mit sinkendem Anteil an mechanisch abgetrenntem Wasser bzw. wässriger Phase ein Anstieg der Haze-Werte nach Heißwasserlagerung bei 70 und 80°C einhergeht.

Tab. 3 Betriebsparameter und Versuchsergebnisse zu Vergleichsbeispiel 3 (den Ergebnissen aus Versuch 2.2 gegenübergestellt)

| Nr. | $n_W$ 1/min | $h_{Eintauch}$ mm | $T_W$ °C | $\dot{m}_{Disp}$ kg/h | $w_{H2O}$(von M) kg/kg | P kg/kg | HAZE vorher | HAZE 70 °C | HAZE 80 °C | G* cm/h |
|-----|------|------|------|------|------|------|------|------|------|------|
| 2.2 | 0.55 | 135 | -9 | 7 | 10% | 92% | 2% | 59% | 75% | 11 |
| 3.1 | 0.55 | 135 | -9 | 7 | 30% | 70% | 2% | 69% | 86% | 11 |
| 3.2 | 0.55 | 135 | -9 | 7 | 40% | 54% | 2% | 93% | 98% | 11 |
| 3.3 | 0.55 | 135 | -9 | 7 | 59% | 0% | 2% | 100% | 100% | 11 |

**Erfindungsgemäßes Beispiel 4**

Aufgearbeitet wurde die Dispersion 2 mit dem in Abbildung 4 dargestellten Verfahren durch kontinuierliche Gefrierkoagulation mit einer kontinuierlichen Walzeneismaschine der Firma HIGEL, Typ HEC 400 (schematisch dargestellt in Abbildung 2) mit einem Walzenradius $r_W$ = 0.09 m und einer Walzenbreite $b_W$= 0.19 m, anschließendem Auftauen/Sintern in einem wahlweise batch- oder kontinuierlich betreibbaren Rührkessel (CSTR/STR) bei der Temperatur T (siehe Tabelle 4) und anschließender Zentrifugation (Zentrifuge gemäß den Vergleichsbeispielen 1 - 3).

Es wurde ein Rührkessel mit einem Füllvolumen von V = 4 L bis 16 L, ausgestattet mit einer Dampfdosierung, verwendet. Als Rührorgan kam ein Inter-MIG der Fa. EKATO mit einem Durchmesser $d_R$ = 0.9 $d_i$ zum Einsatz, $d_i$ steht dabei für den Innendurchmesser des Rührkessels. Der Rührkessel wurde batchweise betrieben und je eine entsprechende Menge an flüssigem Wasser zugegeben, so dass eine Dispersion mit einer Polymerkonzentration $w_{Polymer,aus}$ gemäß Tabelle 4 erhalten wurde (die ursprüngliche Polymerkonzentration belief sich auf 41 Gew.-%). Der Massenstrom der gefrorenen Dispersion $\dot{m}_{Disp}$ wurde bestimmt und die Gefrierrate G* über die Gleichungen (2) - (6) berechnet.

Die Zentrifugation erfolgte so lange, bis kein Filtratstrom mehr beobachtet wurde (max. 10 min.). Die erhaltenen P-Werte (als %-Angabe) sind in Tabelle 4 angegeben.

Das restfeuchte Material M wurde nach der Zentrifugation im Trockenschrank bei 50°C auf eine Restfeuchte von $w_{H2O}$ = ca. 1 Gew.-% getrocknet. Für die Versuche 4.1 und 4.2 wurden aus getrocknetem Material (mit einer Restfeuchte von $w_{H2O}$ = max. ca. 1 Gew.-% = $M_{trocken}$) durch die oben beschriebene Compoundierung und anschließendem Spritzguss Prüfkörper mit einer Dicke von 3 mm hergestellt. Bei diesen Prüfkörpern wurden die Haze-Werte ermittelt.

Weitere Betriebsparameter und Ergebnisse sind in Tabelle 4 zusammengefasst.

In Tabelle 4 werden weiter die Ergebnisse der Versuche, bei denen eine Wasserzugabe im Rührkessel (zwischen dem Gefrierschritt und dem Fest-Flüssigtrennungsschritt) erfolgte (Tabelle 4, Versuche 4.1 und 4.2) und das Ergebnis von Versuch 2.2 (aus Vergleichsbeispiel 2), bei dem keine Wasserzugabe zwischen dem Gefrierschritt und dem Fest-Flüssigtrennungsschritt erfolgte, gegenübergestellt. Durch die Wasserzugabe vor der Fest-Flüssigtrennung (Zentrifugation) wird eine Verbesserung der Haze-Werte nach Heißwasserlagerung erreicht. Vergleichbare Haze-Werte können auch durch einen nachgeschalteten Waschschritt nicht mehr erzielt werden (siehe Tabelle 2, Versuche 2.5 und 2.6).

Tab. 4 Betriebsparameter und Versuchsergebnisse zum erfindungsgemäßen Beispiel 4 (mit Vergleichsbeispiel 2.2)

| Nr. | $n_W$ 1/min | $h_{Eintauch}$ mm | $T_W$ °C | $T$ °C | $m_{Disp}$ kg/h | $w_{Polymer,aus}$ kg/kg | $w_{H2O}$ (von M) kg/kg | $P$ kg/kg | HAZE vorher | HAZE 70 °C | HAZE 80 °C | $G^*$ cm/h |
|---|---|---|---|---|---|---|---|---|---|---|---|---|
| 4.1 | 0.55 | 135 | -9 | 78 | 7 | 25% | 11% | 96% | 2% | 7% | 9% | 11 |
| 4.2 | 0.55 | 135 | -9 | 76 | 7 | 20% | 18% | 94% | 2% | 12% | 15% | 11 |
| 2.2 | 0.55 | 135 | -9 | - | 7 | 41% | 10% | 92% | 2% | 59% | 75% | 11 |

**Erfindungsgemäßes Beispiel 5**

Aufgearbeitet wurde die Dispersion 3 mit dem mit dem in Abbildung 5 durch kontinuierliche Gefrierkoagulation mit einer kontinuierlichen Walzeneismaschine der Firma HIGEL, Typ HEC 400 (schematisch dargestellt in Abbildung 2) mit einem Walzenradius $r_W$ = 0.09 m und einer Walzenbreite $b_W$= 0.19 m, anschließendem Auftauen/Sintern in einem wahlweise batch- oder kontinuierlich betreibbaren Rührkessel (CSTR/STR) bei der Temperatur T (siehe Tabelle 5) und anschließender Zentrifugation (Zentrifuge gemäß den Vergleichsbeispielen 1 - 3).

Es wurde ein Rührkessel mit einem Füllvolumen von V = 4 L bis 16 L, ausgestattet mit einer Dampfdosierung, verwendet. Als Rührorgan kam ein Inter-MIG der Fa. EKATO mit einem Durchmesser $d_R$ = 0.9 $d_i$ zum Einsatz, di steht dabei für den Innendurchmesser des Rührkessels. Der Rührkessel wurde kontinuierlich betrieben. Variiert wurde die Menge der im Rührkessel eingespeisten Dampfmenge $\dot{m}_D$ (mit Temperatur $T_D$ und Druck $p_D$) und damit die sich im Rührkessel einstellende mittlere Sintertemperatur T; der Massenstrom des zur Überführung des Gefriergutes in den Rührkessel eingespeisten Wassers $\dot{m}_{H2O}$ blieb konstant. Die übrigen Betriebsparameter Walzendrehzahl $n_W$, Walzentemperatur $T_W$, Eintauchtiefe $h_{Eintauch}$, Rührerdrehzahl $n_R$ und Verweilzeit im Rührkessel $\tau$ blieben ebenfalls annähernd konstant. Der Massenstrom der gefrorenen Dispersion $\dot{m}_{Disp}$ wurde bestimmt und die Gefrierrate G* über die Gleichungen (2) - (6) berechnet.

Die Zentrifugation erfolgte wie in Vergleichsbeispiel 1 beschrieben. Sie erfolgte so lange, bis kein Filtratstrom mehr beobachtet wurde (max. 10 min.). Die erhaltenen P-Werte (als %-Angabe) sind in Tabelle 5 angegeben.

Die weiteren Betriebsparameter und Ergebnisse sind in Tabelle 5 zusammengefasst. $\Delta T$ steht für die Differenz zwischen der Sintertemperatur T und der Glastemperatur der äußeren Schale bzw. Schicht des dispergierten Polymermaterials $T^G$ (hier: 110 °C).

Die Ergebnisse zeigen, dass die nach der Zentrifugation erzielbare Restfeuchte $w_{H2O}$ von dem restfeuchten Material M mit steigender Sintertemperatur abnimmt.

Tab. 5 Betriebsparameter und Versuchsergebnisse zu dem erfindungsgemäßen Beispiel 5

| Nr. | $n_W$ 1/min | $h_{Eintauch}$ mm | $T_W$ °C | $n_R$ 1/min | $T_D$ °C | $p_D$ bar | $m_D$ kg/h | $m_{H2O}$ kg/h | $m_{Disp}$ kg/h | T °C | $w_{H2O}$ (von M) kg/kg | P kg/kg | $\Delta T$ °C | $\tau$ min. | G* cm/h |
|---|---|---|---|---|---|---|---|---|---|---|---|---|---|---|---|
| 5.1 | 0.55 | 135 | -9 | 89 | 158 | 5 | 2.0 | 3.4 | 7.0 | 83 | 27% | 89% | -27 | 20 | 10 |
| 5.2 | 0.55 | 135 | -9 | 89 | 159 | 5 | 1.9 | 3.4 | 6.9 | 85 | 25% | 90% | -25 | 19 | 10 |
| 5.3 | 0.55 | 135 | -9 | 90 | 158 | 5 | 1.9 | 3.4 | 6.9 | 87 | 18% | 93% | -23 | 20 | 10 |
| 5.4 | 0.55 | 135 | -9 | 90 | 158 | 5 | 2.6 | 3.4 | 6.4 | 91 | 13% | 96% | -19 | 20 | 9 |
| 5.5 | 0.55 | 135 | -9 | 90 | 158 | 5 | 3.3 | 3.4 | 6.5 | 96 | 9% | 97% | -14 | 19 | 10 |

| Formelzeichen | Einheit | Bedeutung |
|---|---|---|
| $b_W$ | m | Breite Walze |
| $d_i$ | m | Innendurchmesser Rührkessel |
| $d_{i,Z}$ | m | Innendurchmesser Zentrifuge |
| $d_R$ | m | Durchmesser Rührer |
| G | cm/h | Gefrierrate nach Gleichung (1) |
| G* | cm/h | Gefrierrate nach Gleichung (2) |
| $h_{Eintauch}$ | mm | Eintauchtiefe Walze |
| $h_{Eis}$ | cm | Dicke Eisschicht |
| $h_Z$ | m | Höhe Zentrifuge |
| $m_{H2O}$ | kg | Masse Wasser |
| $m_{H2O,mech}$ | kg | mechanisch abgetrennte Wassermenge bzw. wässrige Phase |
| $m_{H2O,tot}$ | kg | gesamte Wassermenge (Summe des Wassers bzw. der wässrigen Phase aus der ursprünglich eingesetzten wässrigen Polymerdispersion und dem zugesetzten Wasser und/oder Wasserdampf) |
| $m_{Polymer}$ | kg | Masse Polymer |
| $m_Z$ | kg | Füllmenge Zentrifuge |
| $\dot{m}_{Disp}$ | kg/h | Massenstrom Dispersion |
| $\dot{m}_{Eis}$ | kg/h | Massenstrom Dispersionseis |
| $\dot{m}_{H2O}$ | kg/h | Massenstrom Wasser |
| M | | restfeuchtes Material |
| $M_{trocken}$ | | getrocknetes Material |
| $n_R$ | 1/min | Drehzahl Rührer |
| $n_W$ | 1/min | Drehzahl Walze |
| $n_Z$ | 1/min | Drehzahl Zentrifuge |
| P | kg/kg | Trennfaktor |
| $p_D$ | bar | Druck Dampf |
| $r_W$ | m | Radius Walze |
| $t_{Einfrier}$ | h | Einfrierdauer |
| $t_{Eintauch}$ | h | Eintauchdauer |
| T | °C | Sintertemperatur |
| $T_D$ | °C | Temperatur Dampf |
| $T^G$ | °C | Glastemperatur der äußeren Schale/Schicht des dispergierten Polymermaterials |
| $T_{TS}$ | °C | Temperatur Trockenschrank |
| $T_W$ | °C | Temperatur Walze bzw. Verdampfer |
| $U_{Eintauch}$ | m | eingetauchter Umfang Walze |
| $U_W$ | m | Umfang Walze |
| V | L | Füllvolumen Rührkessel |
| $w_{H2O}$ | kg/kg | Restfeuchte |
| $w_{Polymer}$ | kg/kg | Feststoffanteil (=Polymer) der Dispersion |
| $w_{Polymer, aus}$ | kg/kg | Feststoffanteil (=Polymer) der Dispersion nach Wasser- und/oder Wasserdampfzugabe |
| $\rho_{Eis}$ | kg/m$^3$ | Dichte Dispersionseins |
| $\tau$ | min | Verweilzeit im Rührkessel |
| $\tau_Z$ | min | Zentrifugierzeit |
| $\tau_{TS}$ | min | Verweilzeit Trockenschrank |
| $\tau_{WS}$ | min | Schleuderzeit der Zentrifuge |

**Patentansprüche**

1. Kontinuierliches oder semi-kontinuierliches Gefrierkoagulationsverfahren für eine wässrige Polymerdispersion umfassend einen Gefrierschritt und einen Fest-Flüssigtrennungsschritt, **dadurch gekennzeichnet, dass** das Verfahren den weiteren Schritt umfasst:

- Zugabe von Wasser und/oder Wasserdampf zwischen dem Gefrierschritt und dem Fest-Flüssigtrennungsschritt,

wobei der Fest-Flüssigtrennungsschritt durch einen Trennfaktor P gemäß der Formel

$$P = \frac{m_{H2O,mech}}{m_{H2O,tot}}$$

charakterisiert ist, wobei $m_{H2O,mech}$ für die mechanisch abgetrennte Wassermenge, das heißt, für die Menge der abgetrennten wässrigen Phase, und $m_{H2O,tot}$ für die gesamte Wassermenge als Summe des Wassers, das heißt, der wässrigen Phase aus der ursprünglich eingesetzten wässrigen Polymerdispersion und des zugesetzten Wassers und/oder Wasserdampfs, steht, und wobei $P \geq 0,55$, vorzugsweise $\geq 0,8$, bevorzugt $\geq 0,93$, weiter bevorzugt $\geq 0,95$, ist.

2. Verfahren nach Anspruch 1, **dadurch gekennzeichnet, dass** der Gefrierschritt mit einer Gefrierrate G

$$G = \frac{h_{Eis}}{t_{E\,inf\,rier}}$$

erfolgt, wobei $h_{Eis}$ für die Dicke der innerhalb der Zeit $t_{E\,inf\,rier}$ gebildeten Eisschicht steht,
und wobei G im Bereich von 1 - 100 cm/h, vorzugsweise im Bereich von 2-70 cm/h, bevorzugt im Bereich von 4 - 65 cm/h, besonders bevorzugt im Bereich von 5-60 cm/h, ganz besonders bevorzugt im Bereich von 6-55 cm/h, insbesondere bevorzugt im Bereich von 7-35 cm/h, weiter insbesondere bevorzugt im Bereich von 8-25 cm/h, vor allem bevorzugt im Bereich von 9 - 15 cm/h, liegt.

3. Verfahren nach einem der Ansprüche 1 oder 2, **dadurch gekennzeichnet, dass** der Gefrierschritt auf einer gekühlten, drehenden Walze, vorzugsweise auf einer Walzeneismaschine, erfolgt, wobei die Walze vorzugsweise in die zu gefrierende wässrige Polymerdispersion eintaucht.

4. Verfahren nach zumindest einem der vorherigen Ansprüche, **dadurch gekennzeichnet, dass** die wässrige Polymerdispersion nach dem Gefrierschritt zu 90 Gew.-%, bevorzugt zu 95 Gew.-% und besonders bevorzugt zu 100 Gew.-%, jeweils bezogen auf das Gesamtgewicht der wässrigen Polymerdispersion, gefroren ist.

5. Verfahren nach zumindest einem der vorherigen Ansprüche, **dadurch gekennzeichnet, dass** die wässrige Polymerdispersion eine wässrige Polymerdispersion auf (Meth-)Acrylat-Basis, vorzugsweise auf PMMA-Basis, ist, wobei die wässrige Polymerdispersion vorzugsweise einen oder mehrere Schlagzähmodifier, bevorzugt 2- oder 3-phasige Schlagzähmodifier, enthält.

6. Verfahren nach zumindest einem der vorherigen Ansprüche, **dadurch gekennzeichnet, dass** die wässrige Polymerdispersion nach Wasser- und /oder Wasserdampfzugabe einen gewichtsbezogenen Feststoffanteil hat, der im Bereich von 99,5 % - 10 %, vorzugsweise im Bereich von 75 % - 25 %, bevorzugt im Bereich von 70 % - 30 %, ganz bevorzugt im Bereich von 65 % - 35 %, des gewichtsbezogenen Feststoffanteils der wässrigen Polymerdispersion vor Wasser- und /oder Wasserdampfzugabe liegt.

7. Verfahren nach zumindest einem der vorherigen Ansprüche, **dadurch gekennzeichnet, dass**
das Verfahren einen Auftau- und optional einen Sinterschritt umfasst.

8. Verfahren nach zumindest einem der vorherigen Ansprüche, **dadurch gekennzeichnet, dass**
das Verfahren einen Sinterschritt umfasst, wobei der Sinterschritt bei einer Sintertemperatur T erfolgt, die im Bereich von $T \geq T^G$ - 50 K, vorzugsweise im Bereich von $T \geq T^G$ - 30 K, bevorzugt im Bereich von $T^G$ - 15 K $\leq T \leq T^G$ + 5 K, liegt.

9. Verfahren nach zumindest einem der vorherigen Ansprüche, **dadurch gekennzeichnet, dass** nach dem Fest-Flüssigtrennungsschritt ein Compoundierschritt, vorzugsweise in einem 2-Schnecken-Compounder, unter optionaler Zugabe weiterer Additive erfolgt, wobei die weiteren Additive vorzugsweise ausgewählt sind aus der Gruppe bestehend aus (Co-)Polymeren auf (Meth)acrylatbasis, insbesondere PMMA-Formmassen in Granulatform; UV-Stabilisatorpaketen; Gleitmitteln; Farbstoffen, bevorzugt Farbstoffe zur transparenten Einfärbung; Verarbeitungshilfsmitteln; Antioxidantien und Stabilisatoren.

10. Verfahren nach Anspruch 9, **dadurch gekennzeichnet, dass** zwischen dem Fest-Flüssigtrennungsschritt und dem Compoundierschritt ein Trocknungsschritt und/oder ein Kompaktierungsschritt erfolgt.

11. Verfahren nach zumindest einem der vorherigen Ansprüche, **dadurch gekennzeichnet, dass** das Verfahren ein Produkt liefert, das in Form von Pulver erhalten wird.

12. Verfahren zur Herstellung eines Halbzeuges, einer Formmasse oder eines Formkörpers, **dadurch gekennzeichnet, dass** ein Verfahren nach zumindest einem der vorherigen Ansprüche eingesetzt wird.

13. Verfahren nach Anspruch 12, **dadurch gekennzeichnet, dass** das Halbzeug, die Formmasse oder der Formkörper transparent sind.

14. Verwendung eines Schrittes:

    - Zugabe von Wasser und/oder Wasserdampf,

    in einem kontinuierlichen oder semi-kontinuierlichen Gefrierkoagulationsverfahren für eine wässrige Polymerdispersion umfassend einen Gefrierschritt und einen Fest-Flüssigtrennungsschritt, wobei die Zugabe von Wasser und/oder Wasserdampf zwischen dem Gefrierschritt und dem Fest-Flüssigtrennungsschritt erfolgt, in einem Verfahren gemäß zumindest einem der Ansprüche 1 bis 11, zur Verbesserung der optischen Qualität des Verfahrensproduktes, insbesondere zur Verbesserung der Haze-Werte.

**Claims**

1. Continuous or semi-continuous freeze coagulation process for an aqueous polymer dispersion, comprising a freezing step and a solid-liquid separation step, **characterized in that** the process comprises a further step of:

    - admixing water and/or water vapor between the freezing step and the solid-liquid separation step,

    wherein the solid-liquid separation step is defined by a separation factor P as per the formula

    $$P = \frac{m_{H2O,mech}}{m_{H2O,tot}}$$

    where $m_{H2O,mech}$ represents the mechanically removed amount of water, i.e. the amount of aqueous phase removed, and $m_{H2O,tot}$ represents the total amount of water resulting from summing of the water i.e. the aqueous phase from the originally used aqueous polymer dispersion and the added water and/or water vapor, and wherein P is $\geq 0.55$, preferably $\geq 0.8$, more preferably $\geq 0.93$, and even more preferably $\geq 0.95$.

2. Process according to Claim 1, **characterized in that** the freezing step is effected at a freezing rate G

    $$G = \frac{h_{ice}}{t_{freeze}}$$

    where $h_{ice}$ represents the thickness of the ice layer formed within the time $t_{freeze}$,
    and where G is in the range of 1-100 cm/h, preferably in the range of 2-70 cm/h, more preferably in the range of 4-65 cm/h, yet more preferably in the range of 5-60 cm/h and yet still more preferably in the range of 6-55 cm/h, yet still even more preferably in the range of 7-35 cm/h, yet even further preferably in the range of 8-25 cm/h and most preferably in the range of 9-15 cm/h.

3. Process according to either of Claims 1 and 2, **characterized in that** the freezing step is effected on a cooled, rotating roll, preferably on a roll-type icemaking machine, wherein the roll preferably dips into the aqueous polymer dispersion to be frozen.

4. Process according to at least one preceding claim, **characterized in that** 90%, preferably 95% and more preferably 100% by weight of the total weight of the aqueous polymer dispersion is in a frozen state after the freezing step.

5. Process according to at least one preceding claim, **characterized in that** the aqueous polymer dispersion is an aqueous polymer dispersion based on (meth)acrylate, preferably on PMMA, wherein the aqueous polymer dispersion preferably contains one or more impact modifiers, preferably 2- or 3-phase impact modifiers.

6. Process according to at least one preceding claim, **characterized in that** the aqueous polymer dispersion post water and/or water vapor admixture has a weight-specific solid fraction in the range of 99.5%- 10%, preferably in the range of 75% - 25%, more preferably in the range of 70% - 30%, and most preferably in the range of 65% - 35%, of the weight-specific solid fraction of the aqueous polymer dispersion pre water and/or water vapor admixture.

7. Process according to at least one preceding claim, **characterized in that**
the process comprises a thawing step and optionally a sintering step.

8. Process according to at least one preceding claim, **characterized in that**
the process comprises a sintering step, wherein the sintering step is effected at a sintering temperature T in the range of $T \geq TG - 50\,K$, preferably in the range of $T \geq TG - 30\,K$, more preferably in the range of $TG - 15\,K \leq T \leq TG + 5\,K$.

9. Process according to at least one preceding claim, **characterized in that** the solid-liquid separation step is followed by a compounding step, preferably in a 2-screw compounder, under optional admixture of further additives, wherein the further additives are preferably selected from the group consisting of (co)polymers based on (meth)acrylate, in particular PMMA molding compositions in pellet form; UV stabilizer packages; lubricants; dyes, preferably dyes for transparent coloration; processing aids; antioxidants and stabilizers.

10. Process according to Claim 9, **characterized in that** a drying step and/or a compacting step are carried out between the solid-liquid separation step and the compounding step.

11. Process according to at least one of the preceding claims, **characterized in that** said process supplies a product which is obtained in powder form.

12. Process for producing a semi-finished product, a molding composition or a molded article, **characterized in that** a process according to at least one of the preceding claims is utilized.

13. Process according to Claim 12, **characterized in that** the semi-finished product, the molding composition or the molded article are transparent.

14. The use of a step of

- admixing water and/or water vapor,

in a continuous or semi-continuous freeze coagulation process for an aqueous polymer dispersion comprising a freezing step and a solid-liquid separation step, wherein the step of admixing water and/or water vapor is effected between the freezing step and the solid-liquid separation step, in a process according to at least one of Claims 1 to 11, to improve the optical quality of the process product, in particular to improve the haze values.

**Revendications**

1. Procédé continu ou semi-continu de cryocoagulation pour une dispersion aqueuse de polymère, comprenant une étape de congélation et une étape de séparation solide-liquide, **caractérisé en ce que** le procédé comprend l'étape supplémentaire suivante :

- l'ajout d'eau et/ou de vapeur d'eau entre l'étape de congélation et l'étape de séparation solide-liquide, l'étape de séparation solide-liquide étant **caractérisée par** un facteur de séparation P selon la formule

$$P = \frac{m_{H2O,méc}}{m_{H2O,tot}}$$

$m_{H2O,méc}$ représentant la quantité d'eau séparée mécaniquement, c'est-à-dire la quantité de la phase aqueuse séparée, et $m_{H2O,tot}$ représentant la quantité d'eau totale en tant que somme de l'eau, c'est-à-dire la phase aqueuse constituée par la dispersion aqueuse de polymère utilisée initialement et l'eau et/ou la vapeur d'eau ajoutée, et $P \geq 0{,}55$, de préférence $\geq 0{,}8$, avantageusement $\geq 0{,}93$, de manière davantage préférée $\geq 0{,}95$.

2. Procédé selon la revendication 1, **caractérisé en ce que** l'étape de congélation a lieu avec un taux de congélation G

$$G = \frac{h_{glace}}{t_{congélation}}$$

$h_{glace}$ représentant l'épaisseur de la couche de glace formée pendant le temps $t_{congélation}$, et G se situant dans la plage allant de 1 à 100 cm/h, de préférence dans la plage allant de 2 à 70 cm/h, avantageusement dans la plage allant de 4 à 65 cm/h, de manière particulièrement préférée dans la plage allant de 5 à 60 cm/h, de manière tout particulièrement préférée dans la plage allant de 6 à 55 cm/h, de manière notamment préférée dans la plage allant de 7 à 35 cm/h, de manière encore davantage préférée dans la plage allant de 8 à 25 cm/h, de manière préférée entre toutes dans la plage allant de 9 à 15 cm/h.

3. Procédé selon l'une quelconque des revendications 1 ou 2, **caractérisé en ce que** l'étape de congélation a lieu sur un cylindre rotatif refroidi, de préférence sur une machine à glace à cylindre, le cylindre plongeant de préférence dans la dispersion aqueuse de polymère à congeler.

4. Procédé selon au moins l'une quelconque des revendications précédentes, **caractérisé en ce que** la dispersion aqueuse de polymère est congelée après l'étape de congélation à hauteur de 90 % en poids, de préférence à hauteur de 95 % en poids et de manière particulièrement préférée à hauteur de 100 % en poids, à chaque fois par rapport au poids total de la dispersion aqueuse de polymère.

5. Procédé selon au moins l'une quelconque des revendications précédentes, **caractérisé en ce que** la dispersion aqueuse de polymère est une dispersion aqueuse de polymère à base de (méth)acrylate, de préférence à base de PMMA, la dispersion aqueuse de polymère contenant de préférence un ou plusieurs modificateurs de la résistance aux impacts, de préférence des modificateurs de la résistance aux impacts à 2 ou 3 phases.

6. Procédé selon au moins l'une quelconque des revendications précédentes, **caractérisé en ce que** la dispersion aqueuse de polymère présente après l'ajout d'eau et/ou de vapeur d'eau une proportion de solides relative au poids qui se situe dans la plage allant de 99,5 % à 10 %, de préférence dans la plage allant de 75 % à 25 %, avantageusement dans la plage allant de 70 % à 30 %, de manière tout particulièrement préférée dans la plage allant de 65 % à 35 %, de la proportion de solides relative au poids de la dispersion aqueuse de polymère avant l'ajout d'eau et/ou de vapeur d'eau.

7. Procédé selon au moins l'une quelconque des revendications précédentes, **caractérisé en ce que** le procédé comprend une étape de décongélation et éventuellement une étape de frittage.

8. Procédé selon au moins l'une quelconque des revendications précédentes, **caractérisé en ce que** le procédé comprend une étape de frittage, l'étape de frittage ayant lieu à une température de frittage T qui se situe dans la plage de $T \geq T^G - 50$ K, de préférence dans la plage de $T \geq T^G - 30$ K, avantageusement dans la plage de $T^G - 15$ $K \leq T \leq T^G + 5$ K.

9. Procédé selon au moins l'une quelconque des revendications précédentes, **caractérisé en ce qu'**une étape de malaxage, de préférence dans un malaxeur à 2 vis, avec ajout éventuel d'autres additifs, a lieu après l'étape de séparation solide-liquide, les autres additifs étant de préférence choisis dans le groupe constitué par les (co)polymères à base de (méth)acrylate, notamment les matériaux de moulage à base de PMMA sous la forme de granulats ; les paquets de stabilisateur UV ; les agents lubrifiants ; les colorants, de préférence les colorants pour la coloration transparente ; les adjuvants d'usinage ; les antioxydants et les stabilisateurs.

**10.** Procédé selon la revendication 9, **caractérisé en ce qu'**une étape de séchage et/ou une étape de compactage a lieu entre l'étape de séparation solide-liquide et l'étape de malaxage.

**11.** Procédé selon au moins l'une quelconque des revendications précédentes, **caractérisé en ce que** le procédé fournit un produit qui est obtenu sous la forme de poudre.

**12.** Procédé de fabrication d'un produit semi-fini, d'un matériau de moulage ou d'un corps moulé, **caractérisé en ce qu'**un procédé selon au moins l'une quelconque des revendications précédentes est utilisé.

**13.** Procédé selon la revendication 12, **caractérisé en ce que** le produit semi-fini, le matériau de moulage ou le corps moulé est transparent.

**14.** Utilisation d'une étape :

   - d'ajout d'eau et/ou de vapeur d'eau,

dans un procédé continu ou semi-continu de cryocoagulation pour une dispersion aqueuse de polymère comprenant une étape de congélation et une étape de séparation solide-liquide, l'ajout d'eau et/ou de vapeur d'eau ayant lieu entre l'étape de congélation et l'étape de séparation solide-liquide, dans un procédé selon au moins l'une quelconque des revendications 1 à 11, pour améliorer la qualité optique du produit du procédé, notamment pour améliorer la valeur de trouble.

**Abbildung 1**

**Abbildung 2**

**Abbildung 3**

**Abbildung 4**

**Abbildung 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19718597 C1
- US 4591632 A
- US 4857631 A
- US 2187146 A
- US 20060281946 A1
- DE 3230128 A1
- EP 0467288 B1
- EP 0113924 A
- EP 0522351 A
- EP 0465049 A
- EP 0683028 A
- EP 0528196 A1
- DE 3842796 A
- US 4513118 A
- DE 102005062687 A1
- EP 1332166 B1

**In der Beschreibung aufgeführte Nicht-Patentliteratur**

- **B. ELVERS et al.** Ullmann's Encyclopedia of industrial Chemistry. vol. A23, 255-261
- **ADLER et al.** *Ind. Eng. Chem. Res.,* 1997, vol. 36, 2156